(19) Europäisches Patentamt
European Patent Office
Office européen des brevets

(11) **EP 3 155 385 B1**

(12) **FASCICULE DE BREVET EUROPEEN**

(45) Date de publication et mention de la délivrance du brevet:
**24.04.2024 Bulletin 2024/17**

(21) Numéro de dépôt: **15728554.5**

(22) Date de dépôt: **15.06.2015**

(51) Classification Internationale des Brevets (IPC):
**G01J 9/02** $^{(2006.01)}$ **G01J 11/00** $^{(2006.01)}$

(52) Classification Coopérative des Brevets (CPC):
**G01J 11/00; G01J 9/0215**

(86) Numéro de dépôt international:
**PCT/EP2015/063367**

(87) Numéro de publication internationale:
**WO 2015/193253 (23.12.2015 Gazette 2015/51)**

(54) **DISPOSITIF ET PROCEDE DE CARACTERISATION D'UN FAISCEAU DE LUMIERE**

VORRICHTUNG UND VERFAHREN ZUR CHARAKTERISIERUNG EINES LICHTSTRAHLS

DEVICE AND METHOD FOR CHARACTERIZATION OF A LIGHT BEAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.06.2014 FR 1455472**

(43) Date de publication de la demande:
**19.04.2017 Bulletin 2017/16**

(73) Titulaire: **Commissariat à l'Énergie Atomique et aux Énergies Alternatives 75015 Paris (FR)**

(72) Inventeurs:
• **QUERE, Fabien**
  **F-78140 Vélizy-Villacoublay (FR)**
• **GALLET, Valentin**
  **F-91360 Epinay sur Orge (FR)**
• **PARIENTE, Gustave**
  **F-75013 Paris (FR)**

(74) Mandataire: **Cabinet Camus Lebkiri 25 rue de Maubeuge 75009 Paris (FR)**

(56) Documents cités:
**US-A- 3 694 088**

• **BENJAMÍN ALONSO ET AL: "Frequency resolved wavefront retrieval and dynamics of diffractive focused ultrashort pulses", JOURNAL OF THE OPTICAL SOCIETY OF AMERICA - B, OPTICAL SOCIETY OF AMERICA, WASHINGTON, US, vol. 29, no. 8, 1 août 2012 (2012-08-01), pages 1993-2000, XP007923042, ISSN: 0740-3224 [extrait le 2012-07-17]**
• **DORRER C ET AL: "Characterization of the spectral phase of ultrashort light pulses", COMPTES RENDUS DE L'ACADEMIE DES SCIENCES - SERIES IV - PHYSICS-ASTROPHYSICS, EDITIONS SCIENTIFIQUES ET MEDICALES ELSEVIER, vol. 2, no. 10, 1 décembre 2001 (2001-12-01), pages 1415-1426, XP002489017, ISSN: 1296-2147, DOI: 10.1016/S1296-2147(01)01279-3**
• **OKSENHENDLER T ET AL: "Self-referenced spectral interferometry", APPLIED PHYSICS B ; LASERS AND OPTICS, SPRINGER, BERLIN, DE, vol. 99, no. 1-2, 6 février 2010 (2010-02-06), pages 7-12, XP019801509, ISSN: 1432-0649**

• Liu Jun ET AL: "Self-referenced spectral interferometry based on self-diffraction effect", JOURNAL OF THE OPTICAL SOCIETY OF AMERICA - B., vol. 29, no. 1, 1 January 2012 (2012-01-01), page 29, XP055804164, US ISSN: 0740-3224, DOI: 10.1364/JOSAB.29.000029 Retrieved from the Internet: URL:https://www.osapublishing.org/DirectPD FAccess/60BECFCE-FFEE-4871-98643E5664595 BF 8_225725/josab-29-1-29.pdf?da=1&id=225725& seq=0&mobile=no>

**Description**

**DOMAINE TECHNIQUE DE L'INVENTION**

Le domaine technique de l'invention est celui de la métrologie optique.

Un aspect de la présente invention concerne ainsi un dispositif et un procédé de caractérisation d'un faisceau de lumière, en particulier d'un faisceau de lumière polychromatique, et notamment d'un faisceau laser polychromatique. Le dispositif et le procédé selon un aspect de l'invention permettent en particulier de déterminer les propriétés spatio-temporelles d'un faisceau de lumière et notamment d'un faisceau laser impulsionnel, comprenant une ou plusieurs impulsions laser de durée typiquement femtoseconde. Plus généralement, le dispositif et le procédé selon un aspect de l'invention peuvent être utilisés pour mesurer les fonctions de corrélation croisée entre le champ électromagnétique en un point du faisceau de lumière, qualifié de point de référence, et les champs électromagnétiques en tous les autres points du faisceau de lumière.

**ARRIERE-PLAN TECHNOLOGIQUE DE L'INVENTION**

L'invention sera décrite plus particulièrement en relation à ses applications à la caractérisation d'impulsions laser ultra-brèves présentant des couplages spatio-temporels, bien que ces utilisations ne soient pas exclusives. On entend par « impulsion laser ultra-brève » une impulsion picoseconde, c'est-à-dire de durée comprise entre 0,1 et 100 ps environ, ou femtoseconde, c'est-à-dire de durée inférieure ou égale à 100 fs=0,1 ps. Les durées s'entendent à mi-hauteur du profil d'intensité. Ces impulsions présentent une bande spectrale relativement large, c'est-à-dire typiquement de l'ordre de quelques dizaines de nanomètres, voire de l'ordre de quelques centaines de nanomètres.

Les impulsions laser ultra-brèves présentent de nombreuses applications scientifiques et technologiques ; elles peuvent être amplifiées jusqu'à des énergies de plusieurs joules et former des faisceaux, dits « faisceaux impulsionnels », dont le diamètre va de quelques millimètres à plusieurs centimètres en fonction, notamment, de leur puissance.

De façon générale, les propriétés temporelles du champ électromagnétique d'un faisceau impulsionnel peuvent varier spatialement ou, de façon équivalente, les propriétés spatiales du champ électromagnétique d'un faisceau impulsionnel peuvent dépendre du temps. Par exemple, la durée d'impulsion peut dépendre de la position (x,y) dans le faisceau. Dans la présente description, sauf indication contraire, on considérera un faisceau se propageant dans une direction « z », les axes « x », « y » et « z » formant un repère orthonormal.

Lorsqu'une telle dépendance existe, le champ E(x,y,t) ne peut pas être mis sous la forme :

$$E(x, y, t) = E_1(t) \times E_2(x, y)$$

où $E_1(t)$ est une fonction du temps et $E_2(x,y)$ une fonction de l'espace. On dit alors que le faisceau présente un couplage spatio-temporel (« CST » ou « STC » de l'anglais « Space-Time Coupling »).

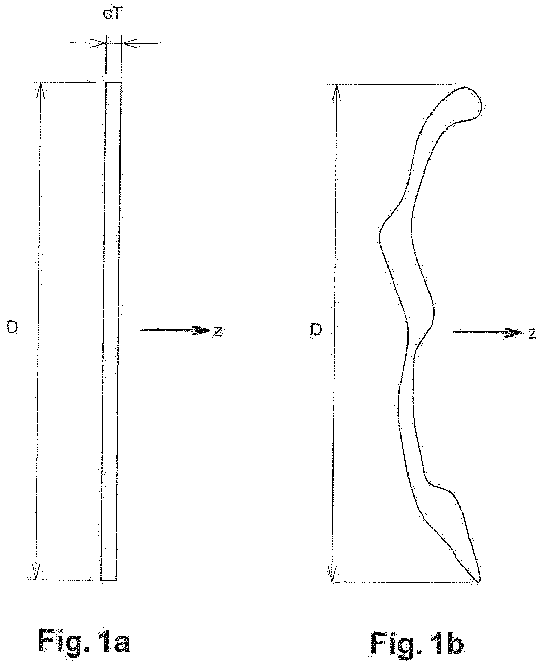

Les couplages spatio-temporels peuvent conduire notamment à une distorsion du front d'intensité d'un faisceau impulsionnel, illustrée à l'aide des figures 1a et 1b. La figure 1a illustre le cas idéal, selon lequel l'énergie électromagnétique d'un faisceau impulsionnel ultra-bref se propageant dans la direction z est répartie dans un disque très fin de diamètre D et d'épaisseur cT, où c est la vitesse de la lumière et T la durée de l'impulsion. Dans l'exemple de la figure 1a, D = 8 cm et cT = 10 $\mu$m, ce qui correspond à une durée d'impulsion d'environ 33 fs. Afin de maximiser l'intensité lumineuse obtenue au foyer, ce qui est généralement souhaité, ce disque doit être le plus « plat » possible. Pour caractériser cette distribution spatiale de l'énergie, on parle de « front d'intensité » du laser. La notion de front d'intensité ne doit pas être confondue avec celle de « front d'onde »

En pratique, et notamment dans le cas des lasers de haute puissance à grand diamètre de faisceau, les fronts d'intensité peuvent ne pas être plans mais distordus, comme illustré sur la figure 1b. Par conséquent, le pic de l'impulsion peut être atteint à des instants différents dans les différents points de la section du faisceau dans le plan (x,y), et la durée d'impulsion peut aussi varier d'un point à l'autre. D'autres types de couplage spatio-temporels sont également possibles, comme par exemple une rotation des fronts d'onde dans le temps.

Des techniques de mesure de ces couplages ont été proposées, mais elles restent limitées dans leurs performances, complexes à mettre en oeuvre et inadaptées à des faisceaux de grande taille, typiquement issus de sources de haute puissance. En conséquence, ces techniques ne sont pas largement répandues. En effet, un faisceau lumineux est d'autant plus susceptible de présenter un couplage spatio-temporel qu'il est de grande taille. C'est donc en particulier pour de tels faisceaux lumineux qu'il est important de pouvoir réaliser une mesure de couplages spatio-temporels.

Ces techniques sont répertoriées ci-après.

- La technique « SPIDER-2D », coûteuse et complexe, impose une limitation de la taille du faisceau à caractériser.

SPIDER-2D permet la reconstruction du faisceau à caractériser en fonction du temps t et d'une direction transverse, x ou y.

- La technique « STRIPED FISH » est plus simple à mettre en oeuvre et moins coûteuse que SPIDER-2D. STRIPED FISH permet en outre la reconstruction du faisceau à caractériser en fonction du temps t et des deux directions transverses x et y. Toutefois, STRIPED FISH impose également une limitation de la taille du faisceau à caractériser, nécessite l'utilisation d'un faisceau de référence pouvant se révéler très difficile à obtenir, et ne permet qu'un faible échantillonnage spectral.

- La technique « HAMSTER » est décrite dans l'article de Cousin et al., « Three-dimensional spatiotemporal pulse characterization with an acoustooptic pulse shaper and a Hartmann-Shack wacefront sensor », Optics Letters 37, 3291 (2012). HAMSTER utilise un modulateur acousto-optique et un senseur de front d'onde 2D de type Shack-Hartmann afin d'effectuer une mesure temporelle en un point du faisceau à caractériser, puis de mesurer le front d'onde spatial de différentes tranches spectrales du faisceau à caractériser. A l'issue de deux séries de mesures, HAMSTER parvient à une reconstruction spatio-temporelle complète, c'est-à-dire en en fonction du temps t et des deux directions transverses x et y, du faisceau à caractériser. La technique HAMSTER implique néanmoins une certaine complexité et un coût élevé, du fait notamment de l'utilisation d'un modulateur acousto-optique. D'autre part, la technique HAMSTER est inadaptée pour des faisceaux de grand diamètre.

- La technique « SEA TADPOLE » consiste à collecter la lumière en différents points du faisceau à caractériser avec une première fibre optique, en déplaçant la première fibre optique aux différents points du faisceau. Un faisceau auxiliaire est injecté dans une seconde fibre optique. Les extrémités de sortie des première et seconde fibres optiques sont placées proches l'une de l'autre, de manière qu'en divergeant, les faisceaux en sortie desdites première et seconde fibres optiques se recouvrent spatialement et produisent des interférences spatiales. Ces interférences spatiales sont résolues spectralement à l'aide d'un spectromètre, pour l'obtention d'un interférogramme. Cet interférogramme permet de déterminer la différence de phase spectrale entre le faisceau injecté dans la première fibre, et celui injecté dans la seconde fibre. On compare donc les propriétés spectrales de la lumière collectée en un point du faisceau à caractériser avec celles du faisceau auxiliaire. En déplaçant la première fibre en une pluralité de points du faisceau à caractériser, on compare chacun de ces points au faisceau auxiliaire, ce qui permet de reconstruire la phase spectrale du faisceau à caractériser. Contrairement aux techniques SPIDER-2D et STRIPED FISH, la technique SEA TADPOLE présente l'avantage de ne pas limiter la taille du faisceau à caractériser. De même que pour STRIPED FISH, le montage est relativement simple et peu coûteux et la reconstruction du faisceau à caractériser s'effectue selon trois dimensions (x, y, t). Cependant, la caractérisation d'un faisceau par SEA TADPOLE nécessite un grand nombre de tirs laser, la phase spectrale étant déterminée point par point. La nécessité d'effectuer plusieurs tirs laser impose que le faisceau laser à caractériser soit stable et reproductible tir-à-tir, ce qui n'est pas toujours les cas pour les lasers femtosecondes, et en particulier pour les lasers femtosecondes de haute puissance. Une autre limitation de la technique SEA TADPOLE est constituée par l'utilisation de fibres optiques, qui introduisent des fluctuations de phase aléatoires.

- L'état de la technique le plus proche est constitué par la technique dite « MUFFIN », qui est décrite dans le brevet FR 2976663 (A1). Les techniques SPIDER-2D, STRIPED FISH et SEA TADPOLE précédemment évoquées sont également décrites de manière détaillée dans le préambule du brevet FR 2976663 (A1). La technique MUFFIN se présente comme un perfectionnement de la technique SEA TADPOLE. Au lieu d'utiliser deux fibres optiques - une première fibre optique que l'on déplace successivement en N points du faisceau à caractériser et une seconde fibre optique qui sert de référence, MUFFIN propose d'utiliser directement un ensemble de N fibres optiques. Les extrémités d'entrée de ces N fibres collectent la lumière en N points différents du faisceau à caractériser. Les extrémités de sortie de ces N fibres sont placées les unes à côté des autres sur une ligne, de manière que les faisceaux en sortie desdites fibres se recouvrent et interfèrent spatialement. La technique MUFFIN parvient ainsi, en un seul tir et sans nécessairement disposer d'un faisceau auxiliaire, au résultat de SEA TADPOLE. MUFFIN n'élimine pas d'emblée le problème de fluctuation de phase dans les fibres optiques, déjà identifié pour SEA TADPOLE. De telles fluctuations de phases peuvent empêcher une reconstruction complète du faisceau à caractériser. Une solution à ce problème a été proposée dans le brevet cité plus haut, mais elle complexifie l'usage de la technique MUFFIN. Par ailleurs, il est difficile avec la technique MUFFIN d'utiliser un grand nombre de fibres optiques. En pratique, le nombre maximum de fibres optiques est de l'ordre de quelques dizaines. En conséquence, la technique MUFFIN ne permet qu'un échantillonnage spatial limité du faisceau à caractériser.

Les documents "Frequency resolved wavefront retrieval and dynamics of diffractive focused ultrashort pulses", Alonso et al. 2012, J. Opt. Soc. Am. B., vol. 29, No. 8 (XP7923042) et "Self-referenced spectral interferometry based on self-diffraction effect", Liu et al. 2012, J. Opt. Soc. Am. B, vol. 29, No. 1 (XP055804164) divulguent des procédés et dispositifs de caractérisation d'impulsions laser ultra-brèves.

## RESUME DE L'INVENTION

L'invention vise donc à offrir une solution aux problèmes évoqués précédemment, en proposant un dispositif et un procédé de caractérisation d'un faisceau de lumière adaptés pour un faisceau de lumière de grande taille et permettant une reconstruction complète dudit faisceau de lumière avec un bon échantillonnage spatial et un bon échantillonnage spectral, tout en demeurant relativement simple et peu coûteuse à mettre en oeuvre.

Un aspect de l'invention concerne donc essentiellement un dispositif de caractérisation d'un faisceau de lumière comportant une ou plusieurs impulsions laser ultra-brèves selon la revendication 9.

Grâce à l'invention, on utilise avantageusement une partie, considérée comme étant un point source, du premier sous-faisceau afin de générer un faisceau de référence de grande taille permettant de caractériser l'ensemble du faisceau à caractériser. On entend par « faisceau de référence de grande taille » le fait que, dans un plan de mesure souhaité, la taille du faisceau de référence est supérieure ou égale à la taille du faisceau à caractériser. Grâce à la différence de rayon de courbure entre les première et deuxième optiques, les fronts d'onde du faisceau de référence sont du premier type et les fronts d'onde du faisceau à caractériser sont du deuxième type, le deuxième type étant différent du premier type. Le type d'un front d'onde est notamment déterminé en fonction du rayon de courbure dudit front d'onde. Ainsi, dans le plan de mesure souhaité, le faisceau de référence considéré comme étant issu d'un point source interfère spatialement avec chaque point du faisceau à caractériser. On obtient ainsi une caractérisation du faisceau à caractériser, relativement au faisceau de référence, ledit faisceau de référence étant obtenu d'une manière simple, efficace et peu coûteuse.

Outre les caractéristiques qui viennent d'être évoquées dans le paragraphe précédent, le dispositif de caractérisation d'un faisceau de lumière selon un aspect de l'invention peut présenter une ou plusieurs caractéristiques complémentaires parmi les suivantes, considérées individuellement ou selon toutes les combinaisons techniquement possibles.

- L'optique séparatrice et l'optique recombinatrice forment une seule et même optique assurant la séparation du faisceau de lumière d'une part, et la recombinaison du faisceau de référence et du faisceau à caractériser d'autre part.
- Le calculateur est un calculateur de transformée de Fourier entre les informations de type temporel et fréquentiel qui, à partir de l'information de l'un de ces types, calcule la transformée de Fourier de l'autre type.

Un autre aspect de l'invention concerne un procédé de caractérisation d'un faisceau de lumière comportant une ou plusieurs impulsions laser ultra-brèves selon la revendication 1.

Dans la présente description, on entend par « interférogramme temporel » l'ensemble des motifs d'interférence bidimensionnels pour chaque délai temporel $\tau$ balayant l'intervalle de temps T1 avec le pas P1. L'interférogramme temporel comporte donc une information tridimensionnelle, selon deux dimensions spatiales et une dimension temporelle. Le premier procédé de caractérisation d'un faisceau de lumière selon un aspect de l'invention permet un excellent échantillonnage spatial du faisceau à caractériser. Grâce au balayage par le délai temporel $\tau$ de l'intervalle de temps T1 avec un pas P1, le premier procédé de caractérisation d'un faisceau de lumière selon un aspect de l'invention permet un excellent échantillonnage spectral du faisceau à caractériser. La qualité de l'échantillonnage spectral est en effet liée à la longueur de l'intervalle de temps T1 que balaie le délai temporel $\tau$.

Outre les caractéristiques qui viennent d'être évoquées dans le paragraphe précédent, le procédé de caractérisation d'un faisceau de lumière selon un aspect de l'invention peut présenter une ou plusieurs caractéristiques complémentaires parmi les suivantes, considérées individuellement ou selon toutes les combinaisons techniquement possibles.

- Le procédé comporte, pour au moins un délai temporel $\tau$ balayant l'intervalle de temps T1 avec le pas P1, une étape de calcul par le calculateur de l'intensité et de la distribution spatiale de l'intensité du faisceau à caractériser. Ladite étape permet avantageusement de prendre en compte d'éventuelles fluctuations des propriétés de la source de lumière au cours du temps, c'est-à-dire typiquement d'une impulsion à l'autre dans le cas d'une source de lumière impulsionnelle. D'éventuelles fluctuations de l'intensité et de la distribution spatiale de l'intensité de la source de lumière pendant l'intervalle de temps T1 de balayage sont en effet susceptibles de dégrader les motifs d'interférences bidimensionnels mesurés, et donc les spectres complexes qui en sont déduits.

- De manière préférentielle, le procédé comporte, pour chaque délai temporel $\tau$ balayant l'intervalle de temps T1 avec le pas P1, ladite étape de calcul par le calculateur de l'intensité et de la distribution spatiale de l'intensité du faisceau à caractériser.

- Le procédé comporte avantageusement :

  ∘ une étape de mesure de la phase spatiale à une fréquence $\omega_0$ du faisceau de référence $\varphi_{ref}(x,y,\omega_0)$, ladite phase spatiale $\varphi_{ref}(x,y,\omega_0)$ étant caractéristique de la courbure du front d'onde du faisceau de référence introduite par la première optique,

  ∘ puis une étape de soustraction de la phase spatio-spectrale $\frac{\omega}{\omega_0}\, \varphi_{ref}(x,y,\omega_0)$ à la phase spatio-spectrale relative $\varphi_R(x,y,\omega)$, pour l'obtention de la phase spatio-spectrale relative corrigée du faisceau à caractériser.

Ainsi, la courbure du front d'onde du faisceau de référence qui est introduite par la première optique est prise en compte.

- Selon une première alternative, le procédé comporte avantageusement :

  ∘ une étape de mesure de la phase spatio-spectrale du premier sous-faisceau $\varphi_{ref}(x,y,\omega)$, dite « phase spatio-spectrale de référence »,
  ∘ puis une étape de soustraction de ladite phase spatio-spectrale de référence $\varphi ref(x,y,\omega)$ à la phase spatio-spectrale relative $\varphi_R(x,y,\omega)$, pour l'obtention de la phase spatio-spectrale absolue du faisceau à caractériser $\varphi_{abs}(x,y,\omega)$.

Ainsi, on obtient une caractérisation absolue du faisceau à caractériser, indépendamment du faisceau de référence.

- Selon une deuxième alternative, le procédé comporte avantageusement :

  ∘ une étape de mesure de la phase spatiale à une fréquence $\omega_0$ du faisceau de référence $\varphi_{ref}(x,y,\omega_0)$, ladite phase spatiale $\varphi_{ref}(x,y,\omega_0)$ étant caractéristique de la courbure du front d'onde du faisceau de référence introduite par la première optique,
  ∘ une étape de mesure de la phase spatio-spectrale du premier sous-faisceau $\varphi_{ref}(x,y,\omega)$, dite « phase spatio-spectrale de référence »,
  ∘ puis une étape de soustraction de ladite phase spatio-spectrale de référence $\varphi ref(x,y,\omega)$ et de la phase spatio-spectrale $\frac{\omega}{\omega_0}\, \varphi ref(x,y,\omega_0)$ à la phase spatio-spectrale relative $\varphi_R(x,y,\omega)$, pour l'obtention de la phase spatio-spectrale absolue corrigée du faisceau à caractériser.

Ainsi, on obtient une caractérisation absolue du faisceau à caractériser tout en corrigeant la courbure du front d'onde du faisceau de référence qui est introduite par la première optique.

- Le procédé comporte avantageusement une étape de filtrage du premier sous-faisceau permettant d'augmenter la qualité dudit premier sous-faisceau. On contribue donc à augmenter la qualité du faisceau de référence, qui est issu d'une partie, assimilée à un point source, du premier sous-faisceau. L'étape de filtrage peut être une étape de filtrage linéaire. On améliore ainsi avantageusement les propriétés spatiales du premier sous-faisceau. Alternativement, l'étape de filtrage peut être une étape de filtrage non-linéaire. On étend ainsi avantageusement le spectre du premier sous-faisceau, et donc du faisceau de référence qui est le premier sous-faisceau en sortie de la première optique. En élargissant le spectre du faisceau de référence, on s'affranchit avantageusement au moins partiellement de cas où, avant ladite étape de filtrage, certaines zones du faisceau à caractériser comprennent des fréquences qui ne sont pas dans le spectre du faisceau de référence. L'étape de filtrage peut également comporter une première sous-étape de filtrage linéaire, et une deuxième sous-étape de filtrage non-linéaire.

L'invention et ses différentes applications seront mieux comprises à la lecture de la description qui suit et à l'examen des figures qui l'accompagnent.

**BREVE DESCRIPTION DES FIGURES**

Les figures sont présentées à titre indicatif et nullement limitatif de l'invention.

- La figure 1a illustre un exemple de répartition de l'énergie électromagnétique dans un faisceau laser impulsionnel ultra-bref, dans un cas idéal sans couplage spatio-temporel.
- La figure 1b illustre un exemple de répartition de l'énergie électromagnétique dans un faisceau laser impulsionnel ultra-bref, dans un cas non-idéal avec couplage spatio-temporel.
- La figure 2a illustre une première étape d'un procédé de caractérisation d'un faisceau de lumière selon un premier mode de réalisation de l'invention, utilisant un premier dispositif de caractérisation d'un faisceau de lumière.
- La figure 2b illustre une deuxième étape du procédé de caractérisation d'un faisceau de lumière selon le premier mode de réalisation de l'invention, utilisant le premier dispositif de caractérisation d'un faisceau de lumière.
- La figure 2c illustre une troisième étape du procédé de caractérisation d'un faisceau de lumière selon le premier mode de réalisation de l'invention, utilisant le premier dispositif de caractérisation d'un faisceau de lumière.
- La figure 3 illustre une configuration alternative du procédé de caractérisation d'un faisceau de lumière selon le premier mode de réalisation de l'invention, utilisant un deuxième dispositif de caractérisation d'un faisceau de lumière.
- La figure 4 illustre un exemple de motif d'interférence bidimensionnel pour un délai temporel donné, mesuré expérimentalement lors d'une étape du procédé de caractérisation d'un faisceau de lumière selon le premier mode de réalisation de l'invention.
- Les figures 5a, 5b et 5c montrent respectivement des première, deuxième et troisième simulations des profils spatio-temporels d'un faisceau à caractériser et d'un faisceau de référence, pour des premier, deuxième et troisième délais temporels entre lesdits faisceau de référence et faisceau à caractériser.
- Les figures 6a, 6b et 6c montrent respectivement des premier, deuxième et troisième motifs d'interférences bidimensionnels, correspondants respectivement aux configurations des figures 5a, 5b et 5c.
- La figure 7a montre l'allure d'un interférogramme temporel partiel, mesuré en un point donné (x,y).
- La figure 7b montre l'allure de la transformée de Fourier de l'interférogramme temporel partiel de la figure 7a.
- La figure 8 illustre une première variante du procédé de caractérisation d'un faisceau de lumière selon un mode de réalisation de l'invention.
- La figure 9 illustre une deuxième variante du procédé de caractérisation d'un faisceau de lumière selon un mode de réalisation de l'invention.
- La figure 10 illustre une cinquième variante du procédé de caractérisation d'un faisceau de lumière selon un mode de réalisation de l'invention.
- La figure 11a illustre un procédé de caractérisation d'un faisceau de lumière selon un deuxième exemple, non conforme à l'invention, utilisant un troisième dispositif de caractérisation d'un faisceau de lumière.
- La figure 11b montre une vue partielle en perspective du troisième dispositif de caractérisation d'un faisceau de lumière.
- La figure 11c montre un exemple de spectre fréquentiel d'un motif d'interférence bidimensionnel pour un délai temporel donné, mesuré expérimentalement lors d'une étape du procédé de caractérisation d'un faisceau de lumière selon le deuxième exemple.
- La figure 12a illustre une configuration alternative du procédé de caractérisation d'un faisceau de lumière selon le deuxième exemple, utilisant un quatrième dispositif de caractérisation d'un faisceau de lumière.
- La figure 12b montre une vue partielle en perspective du quatrième dispositif de caractérisation d'un faisceau de lumière.

## DESCRIPTION DETAILLEE D'AU MOINS UN MODE DE REALISATION DE L'INVENTION

Sauf précision contraire, un même élément apparaissant sur des figures différentes présente une référence unique.

Les figures 1a et 1b ont été précédemment décrites.

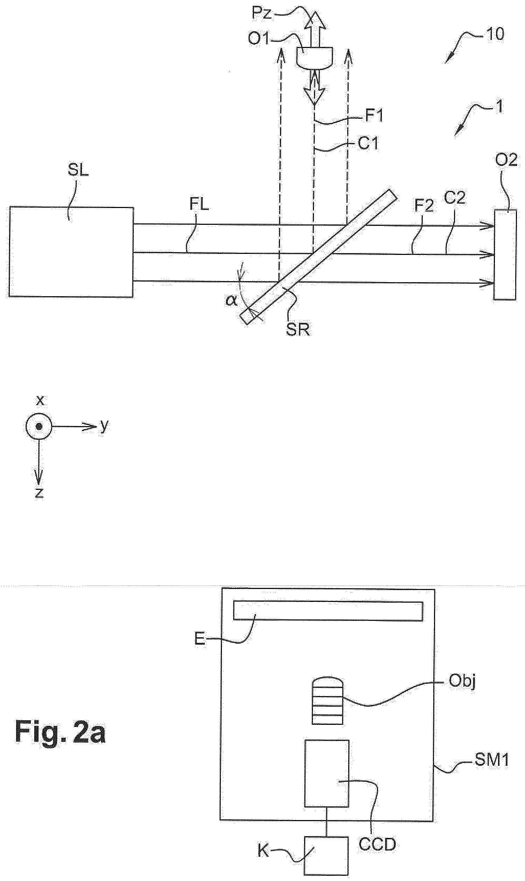

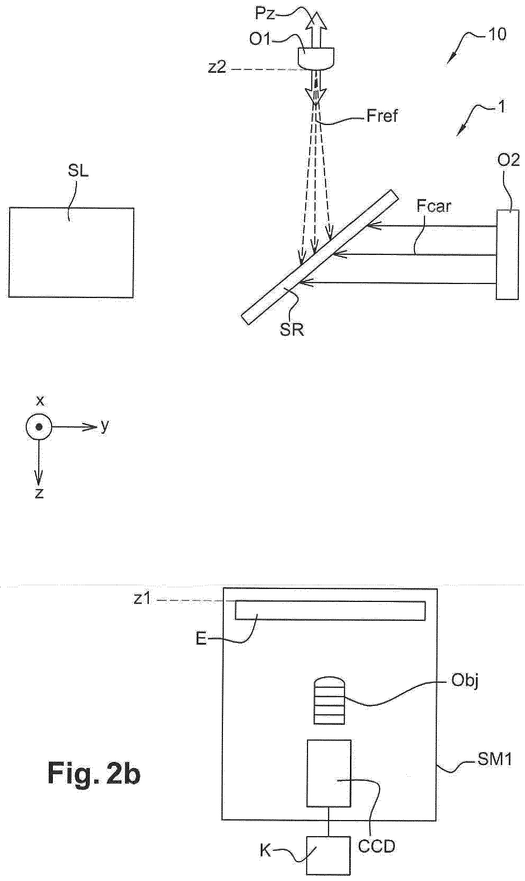

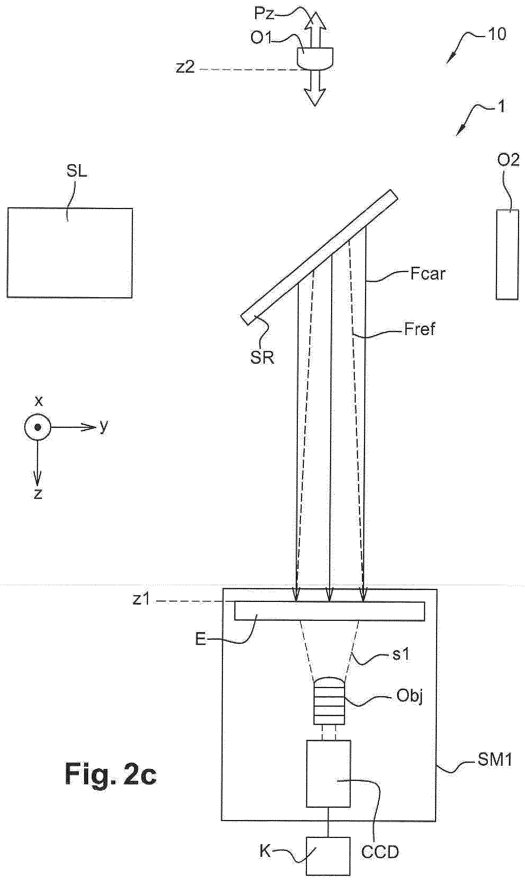

Les figures 2a, 2b et 2c montrent respectivement une première étape a), une deuxième étape b) et une troisième étape c) d'un procédé 10 de caractérisation d'un faisceau de lumière selon un premier mode de réalisation de l'invention. Le premier mode de réalisation est également dit « mode multi-coups ». Un deuxième mode de réalisation, dit « mode mono-coup », est ultérieurement décrit.

Selon le premier mode de réalisation de l'invention, le procédé 10 utilise un premier dispositif 1 de caractérisation d'un faisceau de lumière, qui est représenté aux figures 2a à 2c. Le dispositif 1 comporte :

- une optique SR ;
- une première optique O1 ;
- une deuxième optique 02 ;
- un moyen de contrôle Pz d'un délai temporel $\tau$ ;
- un système de mesure SM1 ;
- et un calculateur K.

Dans l'exemple de réalisation qui est particulièrement illustré aux figures 2a à 2c, la première optique O1 et la deuxième optique 02 sont des optiques réfléchissantes, tels que des miroirs. Selon une alternative non illustrée, la première optique O1 et/ou la deuxième optique 02 peuvent également être des lentilles optiques. Dans l'un ou l'autre cas, les première et deuxième optiques O1 et O2 ont des rayons de courbure différents. Dans l'exemple de réalisation qui est particulièrement illustré aux figures 2a à 2c, la première optique O1 est une optique divergente, et plus précisément un miroir divergent, tandis que la deuxième optique 02 est une optique plane, et plus précisément un miroir plan. Selon une alternative non illustrée, la première optique O1 peut être une optique convergente et/ou la deuxième optique 02 peut être une optique divergente ou convergente. Une pluralité de combinaisons est ainsi envisageable pour les première et deuxième optiques O1 et 02, dans la mesure où le rayon de courbure de la première optique O1 est différent du rayon de courbure de la deuxième optique 02.

Il est fait référence dans la suite de cette description à un repère orthonormé de centre O et d'axes x, y et z, définissant des plans Oxz, Oxy et Oyz.

Lors de ladite première étape a), illustrée à la figure 2a, un faisceau de lumière FL, généré par une source de lumière SL, est envoyé sur l'optique SR. Dans l'exemple particulier de réalisation ici décrit, la source de lumière SL est un laser impulsionnel femtoseconde, capable de générer des impulsions de l'ordre de 25 femtosecondes à une fréquence de 10 Hz, chaque impulsion ayant une énergie de l'ordre de 2,5 J. La puissance crête de ce laser impulsionnel est de l'ordre de 100 TW, tandis que sa puissance moyenne atteint 25 W environ. Le faisceau de lumière FL en sortie de la source de lumière SL est donc formé, dans l'exemple considéré, par une succession d'impulsions lumineuses. Le faisceau de lumière FL présente dans l'exemple considéré un diamètre de l'ordre de 80 mm. D'une manière générale, le diamètre d'un faisceau est mesuré dans un plan orthogonal à la direction de propagation dudit faisceau. Le diamètre du faisceau de lumière FL est donc mesuré dans un plan parallèle au plan Oxz. L'optique SR est par exemple un miroir semi-réfléchissant, qui lorsqu'il reçoit un faisceau de lumière, en réfléchit une partie et en transmet une autre partie.

Le faisceau de lumière FL est alors séparé par l'optique SR en un premier sous-faisceau F1 et un deuxième sous-faisceau F2. L'optique SR définit un premier chemin optique C1 pour le premier sous-faisceau F1 et un deuxième chemin optique C2 pour le deuxième sous-faisceau F2. Les premier et deuxième sousfaisceaux présentent sensiblement le même diamètre que le faisceau de lumière initial FL. Le diamètre du premier sous-faisceau est mesuré dans un plan parallèle au plan Oxy, tandis que le diamètre du deuxième sous-faisceau est mesuré dans un plan parallèle au plan Oxz. Dans l'exemple de réalisation ici décrit, le faisceau de lumière FL arrive sur l'optique SR sous une incidence $\alpha$ de l'ordre de 45°. Le faisceau de lumière FL peut également, de manière équivalente, arriver sur l'optique SR sous une incidence de l'ordre de 135°. Dans l'exemple de réalisation ici décrit, le premier sous-faisceau F1 est transmis par l'optique SR, tandis que le deuxième sous-faisceau F2 est réfléchi par l'optique SR. Selon une alternative préférentielle, le premier sous-faisceau F1 est réfléchi par l'optique SR, tandis que le deuxième sous-faisceau F2 est transmis par l'optique SR.

Lors de la deuxième étape b), illustrée à la figure 2b, le premier sous-faisceau F1 se propage et atteint au moins partiellement la première optique O1 agencée sur le premier chemin optique C1, tandis que le deuxième sous-faisceau F2 se propage et atteint au moins partiellement la deuxième optique 02 agencée sur le deuxième chemin optique C2. Le positionnement de la première optique O1 sur le premier chemin optique C1 et de la deuxième optique 02 sur le deuxième chemin optique C2 est choisi de telle sorte que le premier sous-faisceau en sortie de la première optique, dit « faisceau de référence Fref », et le deuxième sous-faisceau en sortie de la deuxième optique, dit « faisceau à caractériser Fcar », présentent entre eux un délai temporel $\tau$.

La première optique O1 est préférentiellement agencée de manière que le premier sous-faisceau F1 parvienne sur la première optique O1 sous une incidence normale. La deuxième optique 02 est préférentiellement agencée de manière que le deuxième sous-faisceau F2 parvienne sur la deuxième optique 02 sous une incidence normale. Autrement dit, dans l'exemple considéré, la première optique O1 est agencée parallèlement au plan Oxy, tandis que la deuxième optique 02 est agencée parallèlement au plan Oxz.

Dans l'exemple de réalisation qui est particulièrement illustré aux figures 2a à 2c, le premier sous-faisceau F1 et le deuxième sous-faisceau F2 ont des fronts d'onde plans ou quasi-plans. En aval de la première optique O1 qui est un miroir divergent, le faisceau de référence Fref présente des fronts d'onde sphériques. Les fronts d'onde du faisceau de référence Fref sont donc modifiés par rapport aux fronts d'onde du premier sous-faisceau F1, en raison de la première courbure de la première optique O1. En aval de la deuxième optique 02 qui est un miroir plan, le faisceau à caractériser Fcar présente des fronts d'onde plans ou quasi-plans, sensiblement identiques aux fronts d'onde du deuxième sous-faisceau F2. Selon une alternative non illustrée, la première optique O1 peut ne pas modifier le rayon de courbure du faisceau de référence Fref par rapport au premier sous-faisceau F1 et/ou la deuxième optique 02 peut modifier le rayon de courbure du faisceau à caractériser Fcar par rapport au deuxième sous-faisceau F2, dans la mesure où le rayon de courbure de la première optique O1 est différent du rayon de courbure de la deuxième optique O2.

La deuxième optique 02 présente préférentiellement un diamètre, ici mesuré dans un plan parallèle au plan Oxz, supérieur ou égal au diamètre du faisceau lumineux FL, de sorte que le diamètre du faisceau à caractériser Fcar demeure sensiblement le même en aval et en amont de la deuxième optique 02. D'une manière générale, on choisit avantageusement le diamètre dO2 de la deuxième optique 02 de sorte que :

$$dO2 > DFL * \sqrt{2}$$

avec DFL le diamètre du faisceau lumineux FL. Dans l'exemple de réalisation ici décrit, le diamètre DFL du faisceau lumineux FL étant de l'ordre de 8 cm, le diamètre dO2 est avantageusement choisi tel que : $DOp1 > 8 * \sqrt{2}$. On peut ainsi choisir une deuxième optique 02 présentant un diamètre dO2 de l'ordre de 15 cm.

On souhaite, dans le procédé 10 de caractérisation selon le premier mode de réalisation de l'invention, contrôler le délai temporel τ entre le faisceau de référence Fref et le faisceau à caractériser Fcar, afin que ledit délai temporel τ puisse balayer un intervalle de temps T1 avec un pas P1. Le choix de l'intervalle de temps T1 et du pas P1 est détaillé ultérieurement. Le moyen de contrôle Pz est utilisé afin de contrôler le délai temporel τ entre le faisceau de référence Fref et le faisceau à caractériser Fcar. Le moyen de contrôle Pz est typiquement une platine piézoélectrique ayant une course de 250 μm, permettant d'effectuer des déplacements avec une précision de l'ordre de quelques angströms Å. Le moyen de contrôle Pz permet préférentiellement d'ajuster le positionnement selon l'axe z de la première optique O1. En translatant ladite première optique O1 suivant l'axe z, c'est-à-dire en faisant varier la différence de chemin optique entre les premier et deuxième chemins optiques C1 et C2, on contrôle le délai temporel τ entre le faisceau de référence Fref et le faisceau à caractériser Fcar. Selon une alternative, le moyen de contrôle Pz permet d'ajuster le positionnement selon l'axe y de la deuxième optique 02. Selon une autre alternative, le moyen de contrôle Pz permet à la fois d'ajuster le positionnement selon l'axe z de la première optique O1 et d'ajuster le positionnement selon l'axe y de la deuxième optique 02. Selon cette dernière alternative, le moyen de contrôle Pz comporte alors typiquement une deuxième platine piézoélectrique. Dans la suite de la présente description, on emploie indifféremment les termes « moyen de contrôle » et « platine piézoélectrique ».

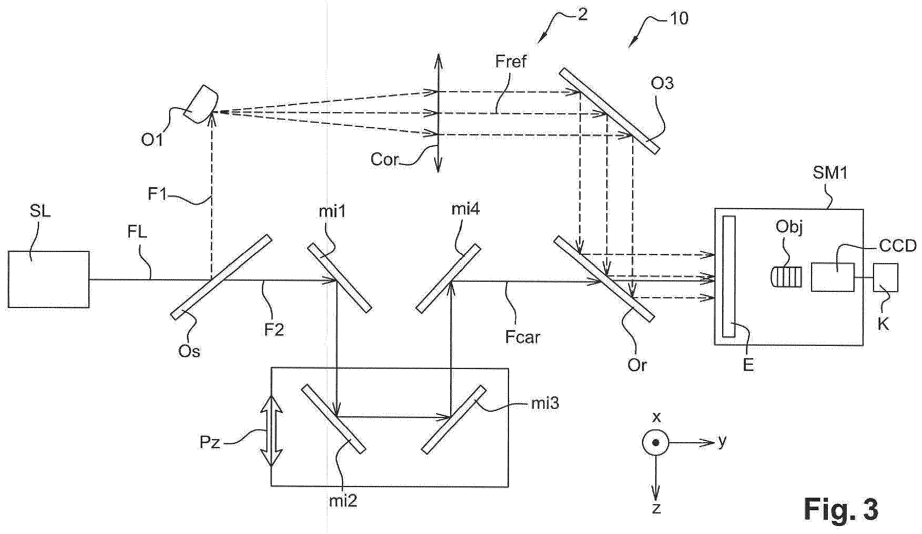

Le faisceau de référence Fref et le faisceau à caractériser Fcar se propagent alors respectivement selon les premier et deuxième chemins optiques C1 et C2 vers l'optique SR, pour la recombinaison du faisceau de référence Fref et du faisceau à caractériser Fcar. Dans l'exemple de configuration ici considéré, l'optique SR assure dans un premier temps la fonction de séparation du faisceau de lumière FL, et dans un deuxième temps la fonction de recombinaison du faisceau de référence Fref et du faisceau à caractériser Fcar. Toutefois, on peut alternativement utiliser, au lieu d'une unique optique SR, une première optique assurant la fonction de séparation du faisceau de lumière FL et une deuxième optique, distincte de la première optique, assurant la fonction de recombinaison du faisceau de référence Fref et du faisceau à caractériser Fcar. Cette configuration alternative est particulièrement illustrée à la figure 3, ultérieurement décrite.

Lors de la troisième étape c), illustrée à la figure 2c, le faisceau de référence Fref et le faisceau à caractériser Fcar sont recombinés par l'optique SR. Le faisceau de référence Fref et le faisceau à caractériser Fcar se propagent alors vers le système de mesure SM1. Le système de mesure SM1 est agencé de sorte que le faisceau à caractériser Fcar parvienne sur le système de mesure SM1 sous une incidence sensiblement normale. Nous considérons par la suite deux plans parallèles au plan Oxy :

- un premier plan z1, dans lequel est réalisée, pour chaque délai temporel τ la mesure du motif d'interférence bidimensionnel M1, et
- un deuxième plan z2, qui est le plan de la première optique O1.

Les premier et deuxième plans z1 et z2 sont représentés sur les figures 2b et 2c. L'éloignement du système de mesure SM1 par rapport à la première optique O1, ici mesuré suivant l'axe z, est choisi tel que, lorsque le faisceau de référence Fref et le faisceau à caractériser Fcar atteignent le premier plan z1 de mesure, le diamètre du faisceau de référence Fref est supérieur ou égal, et préférentiellement supérieur, au diamètre du faisceau à caractériser Fcar. Ainsi, on permet que le faisceau de référence Fref interfère spatialement avec la totalité du faisceau à caractériser Fcar. Lorsque le diamètre du faisceau de référence Fref est égal au diamètre du faisceau à caractériser Fcar, la totalité du faisceau de référence Fref interfère avec la totalité du faisceau à caractériser Fcar. Dans le cas préférentiel où le diamètre du faisceau de référence Fref est supérieur au diamètre du faisceau à caractériser Fcar, seule une partie du faisceau de référence Fref interfère avec le faisceau à caractériser Fcar. Plus le système de mesure SM1 est éloigné, suivant l'axe z, de l'optique SR, plus le diamètre du faisceau de référence Fref augmente et plus la partie du faisceau de référence Fref qui interfère avec le faisceau à caractériser Fcar est petite. Ce faisant, plus la partie du faisceau de référence Fref qui interfère avec le faisceau à caractériser Fcar est petite, moins ladite partie du faisceau de référence Fref est susceptible de présenter des défauts, et donc meilleure est la qualité des résultats qui peuvent être obtenus par le procédé 10 de caractérisation selon le premier mode de réalisation de l'invention. Le faisceau de référence Fref influence également le contraste du motif d'interférence bidimensionnel M1, et donc la qualité des mesures. Le contraste du motif d'interférence bidimensionnel M1 est en effet influencé par le rapport entre l'intensité du faisceau à caractériser Fcar et celle du faisceau de référence Fref, c'est-à-dire le rapport entre la taille du faisceau à caractériser Fcar et celle du faisceau de référence Fref dans le premier plan z1 de mesure. Le contraste du motif d'interférence bidimensionnel M1 est optimum lorsque les intensités du faisceau à caractériser Fcar et du faisceau de référence Fref sont égales dans le premier plan z1 de mesure, ce qui implique que le faisceau de référence Fref ne soit pas trop petit. Il s'agit donc de trouver un compromis pour la taille du faisceau de référence Fref.

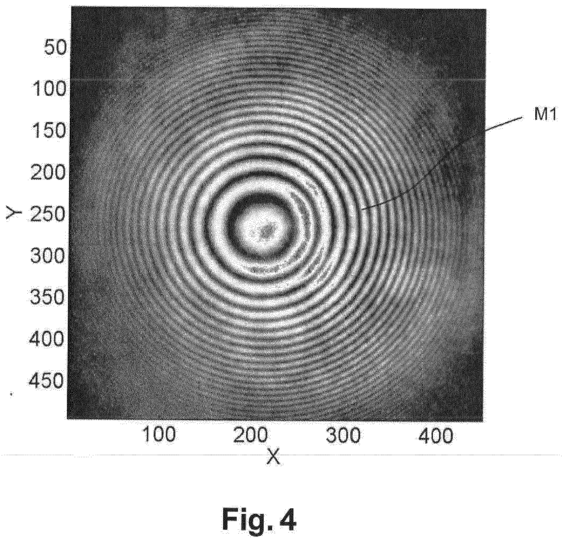

Suite à leur recombinaison, le faisceau de référence Fref et le faisceau à caractériser Fcar interfèrent spatialement. Lorsque le faisceau de référence Fref et le faisceau à caractériser Fcar, qui présentent entre eux un délai temporel $\tau$ donné, atteignent le système de mesure SM1, ils forment un motif d'interférence bidimensionnel M1. Le motif d'interférence bidimensionnel M1 dépend des deux directions transverses x et y et est mesuré pour un délai temporel $\tau$ donné. Le motif d'interférence bidimensionnel M1 peut donc se noter : $M1_\tau(x, y)$. Un exemple de motif d'interférence bidimensionnel M1, mesuré expérimentalement pour un délai temporel $\tau$ donné, est représenté à la figure 4. Le motif d'interférence bidimensionnel M1 est typiquement un ensemble d'anneaux concentriques, l'épaisseur des anneaux diminuant au fur et à mesure que les anneaux s'éloignent du centre du motif.

Le motif d'interférence bidimensionnel M1 est alors mesuré au moyen du système de mesure SM1. On propose au moins deux types de système de mesure, en fonction de la taille, c'est-à-dire du diamètre, du faisceau à caractériser Fcar.

- Un premier type de système de mesure, comportant uniquement un capteur CCD (de l'anglais « Charge-Coupled Device », pour « dispositif à transfert de charge ») d'une caméra, peut être utilisé dans le cas où le faisceau à caractériser Fcar est de diamètre inférieur ou égal au diamètre dudit capteur CCD. En pratique, ce premier type de système de mesure pourra typiquement être utilisé dans le cas d'un faisceau à caractériser Fcar de diamètre inférieur à 1 cm.

- Dans le cas où le faisceau à caractériser Fcar est de diamètre supérieur au diamètre dudit capteur CCD, un deuxième type de système de mesure pourra être utilisé : ce deuxième type de système de mesure comporte, outre le capteur CCD, un écran diffusant E et un objectif Obj. C'est ce deuxième type de système de mesure qui est plus particulièrement représenté sur les figures 2a à 2c. L'écran diffusant E, par exemple agencé sensiblement parallèlement au plan Oxy, diffuse un signal s1 du motif d'interférence bidimensionnel M1. L'objectif Obj capte le signal s1 et forme une image réduite du motif d'interférence bidimensionnel M1 sur le capteur CCD.

Avec le premier type comme avec le deuxième type de système de mesure SM1, le capteur CCD enregistre alors une image du motif d'interférence bidimensionnel M1. Ladite image peut alors être transmise au calculateur K. Nous revenons ultérieurement sur la résolution spatiale requise pour ladite image du motif d'interférence bidimensionnel M1.

Les trois étapes qui viennent d'être décrites, en référence aux figures 2a, 2b et 2c, sont répétées pour chaque délai temporel $\tau$ balayant l'intervalle de temps T1 avec le pas P1. Le nombre total N d'itérations des étapes a), b) et c), correspondant au nombre N de délais temporels $\tau$ pour lesquels on souhaite mesurer le motif d'interférence bidimensionnel M1, vaut : N = E(T1/P1) + 1, où E désigne la fonction partie entière.

Nous revenons à présent sur le choix de l'intervalle de temps T1 et du pas P1 pour le balayage, ou scan, du délai temporel $\tau$. Deux principales conditions sont à respecter :

- la première condition concerne le pas P1. D'après le critère de Shannon, le pas P1 doit être suffisamment petit pour bien échantillonner la période optique du faisceau à caractériser Fcar, notamment afin d'éviter les effets d'aliasing. Le critère de Shannon indique ainsi que deux points de mesure par période optique doivent être réalisés au minimum. Pour un faisceau à caractériser Fcar dont le spectre est centré à 800 nm, avec une période optique de l'ordre de 2,6 fs, le pas P1 doit donc être inférieur à 1,3 fs environ, soit un déplacement de la première optique O1 - ou de la deuxième optique 02 - inférieur à c $\times$ P1/2 = 200 nm, c désignant la vitesse de la lumière. On souhaite donc pouvoir contrôler le déplacement de la première optique O1 - ou de la deuxième optique 02 - avec une précision suffisante, c'est-à-dire typiquement de l'ordre du nm. Une platine piézoélectrique Pz telle que précédemment mentionnée est donc préférentiellement utilisée pour assurer le déplacement de la première optique O1 ou de la deuxième optique 02. Une telle platine piézoélectrique Pz assure en effet une précision inférieure à un nm. En pratique, le spectre du faisceau à caractériser Fcar a une certaine largeur, et pour éviter l'aliasing sur les fréquences les plus élevées de ce spectre, on choisit préférentiellement un pas P1 typiquement deux fois plus petit que la valeur minimale issue du critère de Shannon, soit dans cet exemple particulier : P1 $\approx$ 0,7 fs.

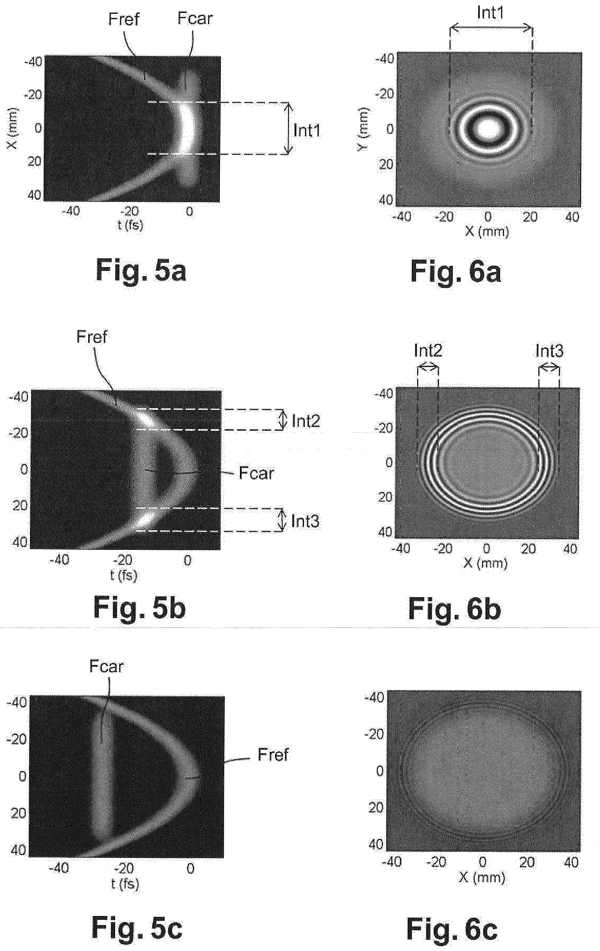

- La seconde condition concerne l'intervalle de temps T1. Il s'agit de scanner un intervalle de temps T1 suffisamment grand pour observer les interférences du faisceau de référence Fref avec tous les points du faisceau à caractériser Fcar. En effet, du fait de la nature impulsionnelle du faisceau lumineux FL, les interférences entre le faisceau de référence Fref et le faisceau à caractériser Fcar ne sont observées, pour un délai temporel $\tau$ donné, que sur une couronne, qui ne couvre qu'une partie seulement du faisceau à caractériser Fcar. Pour reconstruire l'ensemble du faisceau à caractériser Fcar, il faut donc scanner un intervalle de temps T1 suffisamment grand pour que cette couronne passe successivement par tous les points du faisceau à caractériser Fcar. Cette notion est illustrée aux figures 5a à 5c et 6a à 6c.

○ La figure 5a montre une première simulation des profils spatio-temporels du faisceau à caractériser Fcar et du faisceau de référence Fref, pour un délai temporel $\tau$ nul entre lesdits faisceaux Fcar et Fref. Sur cette première simulation, le faisceau de référence Fref interfère avec le faisceau à caractériser Fcar sur une première zone Int1, située au centre du faisceau à caractériser Fcar. De part et d'autre de cette première zone Int1, des zones latérales du faisceau à caractériser Fcar n'interfèrent pas avec le faisceau de référence Fref. La figure 6a montre un premier motif d'interférence bidimensionnel, correspondant à la configuration de la figure 5a, c'est-à-dire à un délai temporel $\tau$ nul entre le faisceau de référence Fref et le faisceau à caractériser Fcar.

○ La figure 5b montre une deuxième simulation des profils spatio-temporels du faisceau à caractériser Fcar et du faisceau de référence Fref, pour un délai temporel $\tau$ de 13 fs entre lesdits faisceaux Fcar et Fref. Sur cette deuxième simulation, le faisceau de référence Fref interfère avec le faisceau à caractériser Fcar sur des deuxième et troisième zones Int2 et Int3. Entre lesdites deuxième et troisième zones Int2 et Int3, une zone centrale du faisceau à caractériser n'interfère pas avec le faisceau de référence Fref. La figure 6b montre un deuxième motif d'interférence bidimensionnel, correspondant à la configuration de la figure 5b, c'est-à-dire à un délai temporel $\tau$ de 13 fs entre le faisceau de référence Fref et le faisceau à caractériser Fcar.

○ La figure 5c montre une troisième simulation des profils spatio-temporels du faisceau à caractériser Fcar et du faisceau de référence Fref, pour un délai temporel $\tau$ de 27 fs entre lesdits faisceaux Fcar et Fref. Sur cette troisième simulation, le faisceau de référence Fref n'interfère quasiment plus avec le faisceau à caractériser Fcar. La figure 6c montre un troisième motif d'interférence bidimensionnel, correspondant à la configuration de la figure 5c, c'est-à-dire à un délai temporel $\tau$ de 27 fs entre le faisceau de référence Fref et le faisceau à caractériser Fcar.

L'intervalle de temps T1 à couvrir ou, de façon équivalente, l'intervalle de distance $\Delta z$ à couvrir, peut alors être aisément calculé, d'une manière bien connue de l'homme du métier. L'intervalle de distance $\Delta z$ peut ainsi s'exprimer :

$$\Delta z = \frac{\Delta x^2}{2L}$$

avec $\Delta x = \Delta y$ le rayon du faisceau à caractériser Fcar et L la distance entre la première optique O1 et le plan de mesure. Sachant que le pas en distance doit être, au plus, de $\lambda/2$ - avec $\lambda$ la longueur d'onde du faisceau à caractériser, le nombre total minimum N de pas à réaliser pour un scan complet est de :

$$N = \Delta x^2 / L \times \lambda$$

Dans l'exemple particulier précédemment décrit de la source laser SL, générant des impulsions de 25 fs et atteignant une puissance crête de 100TW, le faisceau à caractériser présente un rayon $\Delta x$ = 40 mm et une longueur d'onde $\lambda$ = 800 nm. On obtient donc, dans ce cas particulier : $N = 2.10^6/L$, la distance L entre la première optique O1 et le plan de mesure étant exprimée en mm. Afin que le nombre minimum N de pas à réaliser pour un scan complet ne soit pas trop important, on utilisera donc avantageusement de grandes valeurs pour la distance L entre la première optique O1 et le plan de mesure. Pour L = 1000 mm par exemple, on obtient un nombre minimum N de pas à réaliser qui vaut : $N = 2.10^3$. Sachant que le taux de répétition de la source laser SL considérée est de 10 Hz, un scan complet requiert alors environ 3 minutes, en ne réalisant qu'un seul tir laser par point de mesure.

Il est à noter que dans l'hypothèse où le nombre de points de mesure devient critique, c'est-à-dire qu'il mène à un temps de mesure trop important compte tenu de la cadence de la source laser SL, une possibilité est de réaliser plusieurs scans « fins », c'est-à-dire avec des pas qui respectent le critère de Shannon ainsi qu'expliqué plus haut, entre lesquels on réalise des scans avec des pas beaucoup plus importants, qui ne respectent pas le critère de Shannon. On obtient ainsi une caractérisation du faisceau à caractériser Fcar sur une série d'anneaux concentriques disjoints, ce qui peut dans bien des cas être suffisant pour évaluer les distorsions spatio-temporelles présentes dans le faisceau à caractériser.

Nous poursuivons la description des étapes du procédé 10 de caractérisation d'un faisceau de lumière selon le premier mode de réalisation de l'invention. On rappelle que les trois étapes précédemment décrites en référence aux figures 2a, 2b et 2c sont répétées pour chaque délai temporel $\tau$ balayant l'intervalle de temps T1 avec le pas P1. A l'issue de ces N itérations, le capteur CCD a donc enregistré, pour chaque délai temporel $\tau$ balayant l'intervalle de temps T1 avec le pas P1, une image du motif d'interférence bidimensionnel M1 correspondant, soit N images.

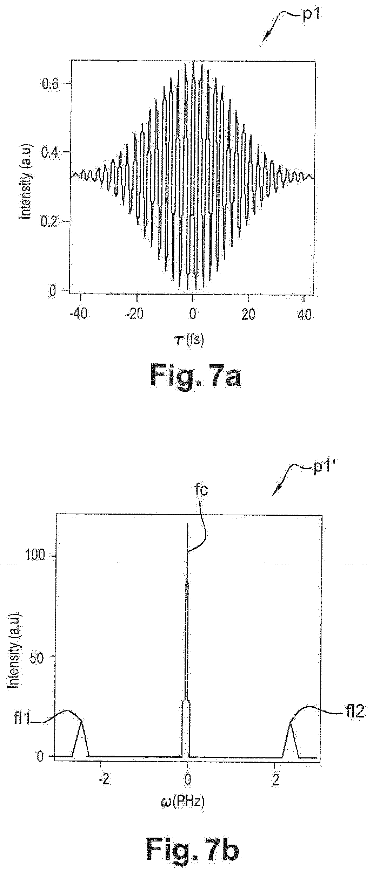

Lors d'une quatrième étape d), le calculateur K peut alors construire, à partir desdites N images des N motifs d'interférences bidimensionnels M1, un interférogramme temporel S1. L'interférogramme temporel S1 dépend des deux directions transverses x et y et du délai temporel $\tau$, le délai temporel $\tau$ balayant l'intervalle de temps T1 avec le pas P1. L'interférogramme temporel S1 peut donc se noter : $S1(x, y, \tau)$. La figure 7a montre l'allure typique d'un interférogramme temporel partiel p1, mesuré en un point donné (x,y). L'interférogramme temporel partiel p1 peut donc se noter : $p1_{x,y}(\tau)$. L'interférogramme temporel S1 peut être vu comme l'ensemble, pour tous les points (x,y), des interférogrammes temporels partiels p1.

Le calculateur K effectue ensuite les cinquième et sixième étapes e) et f) suivantes :

e) pour chaque point (x,y), calcul de la transformée de Fourier S1' de l'interférogramme temporel S1 par rapport à la variable $\tau$, afin de passer dans l'espace des fréquences $\omega$. La transformée de Fourier S1' peut donc se noter : S1'(x,y,$\omega$). La transformée de Fourier S1' présente un pic fréquentiel central fc, un premier pic fréquentiel latéral fl1 et un deuxième pic fréquentiel latéral fl2. La figure 7b montre l'allure typique de la transformée de Fourier partielle p1' de l'interférogramme temporel partiel p1 de la figure 7a. La transformée de Fourier partielle P1' peut donc se noter : $p1'_{x,y}(\omega)$. La transformée de Fourier partielle p1' représente ainsi partiellement, en un point donné (x,y), le pic fréquentiel central fc et les premier et deuxième pics fréquentiels latéraux fl1 et fl2 de la transformée de Fourier S1'. La transformée de Fourier S1' peut être vue comme l'ensemble, pour tous les points (x,y), des transformées de Fourier partielles p1'.

f) Sélection du premier pic fréquentiel latéral fl1 ou du deuxième pic fréquentiel latéral fl2 de la transformée de Fourier S1' et calcul, pour le pic fréquentiel latéral sélectionné, de son amplitude spectrale $A_R(\omega)$, dite « amplitude spectrale relative » et de sa phase spatio-spectrale $\varphi_R(x,y,\omega)$, dite « phase spatio-spectrale relative ». Le choix du pic fréquentiel latéral sélectionné détermine la convention de signe à appliquer aux résultats obtenus par la suite.

La phase spatio-spectrale $\varphi_R(x,y,\omega)$ du pic fréquentiel latéral sélectionné est la différence de la phase spatio-spectrale du faisceau à caractériser Fcar et de la phase spatio-spectrale du faisceau de référence Fref. L'amplitude spectrale $A_R(\omega)$ du pic fréquentiel latéral sélectionné est le produit de l'amplitude spectrale du faisceau à caractériser Fcar et de l'amplitude spectrale du faisceau de référence Fref. Les étapes qui viennent d'être décrites permettent donc d'obtenir :

- la phase spatio-spectrale du faisceau à caractériser Fcar relativement à la phase spatio-spectrale du faisceau de référence, d'où l'appellation de « phase spatio-spectrale relative » ;
- l'amplitude spectrale du faisceau à caractériser Fcar relativement à l'amplitude spectrale du faisceau de référence, d'où l'appellation d' « amplitude spectrale relative ».

Tous les points (x,y) du faisceau à caractériser Fcar peuvent ainsi être comparés à une même référence, qui peut éventuellement rester indéterminée. Ce type de caractérisation d'un faisceau relativement à une référence permet typiquement d'accéder aux variations de forme d'un champ électromagnétique E(x,y,t) en fonction des directions transverses x et y et du temps t.

Nous revenons à présent sur la résolution spatiale requise lors de l'acquisition, pour chaque délai temporel $\tau$, d'une image du motif d'interférence bidimensionnel M1 par le capteur CCD du système de mesure SM1. Comme le montre par exemple la figure 4, le procédé 10 de caractérisation d'un faisceau de lumière selon le premier mode de réalisation de l'invention implique de mesurer des franges d'interférences très serrées. Ceci provient du fait que l'on fait interférer un front d'onde quasiment plan, celui du faisceau à caractériser Fcar, avec un front d'onde sphérique, celui du faisceau de référence Fref. Lorsque l'on s'éloigne du centre du faisceau recombiné, l'angle entre ces deux fronts devient donc de plus en plus fort, comme illustré par exemple aux figures 5a à 5c, si bien que les franges d'interférences deviennent de plus en plus serrées. Dans le cas d'une source de lumière SL de grand diamètre - comme par exemple, le cas particulier de source de lumière SL décrit plus haut, qui émet un faisceau de lumière FL de 80 mm de diamètre, cela implique de disposer d'une bonne résolution spatiale pour la mesure des motifs d'interférence bidimensionnels M1, et donc des interférogrammes temporels S1. En pratique, cela impose d'utiliser une caméra dont le nombre de pixels est suffisant pour permettre de résoudre les franges d'interférence. Dans l'exemple de configuration ici décrit, une caméra de 29 Mpx est ainsi utilisée. Il n'est en revanche pas nécessaire de chercher à reconstruire le champ électromagnétique du faisceau à caractériser sur l'ensemble de ces pixels, car il est très improbable que la structure dudit champ électromagnétique varie spatialement avec des fréquences aussi élevées, pour la grande majorité des sources de lumière existantes. Un maillage de 100 X 100 selon les axes x et y est en pratique tout à fait suffisant pour reconstruire le faisceau laser à caractériser Fcar. Pour limiter le volume de données à traiter et le temps de traitement, on peut donc avantageusement sous-échantillonner les images des motifs d'interférences bidimensionnels une fois qu'elles ont été acquises, et ne garder les données que sur un sous-maillage des images initiales.

Complémentairement à la description qui vient d'être faite du premier mode de réalisation de l'invention, une analyse mathématique dudit procédé 10 est présentée ci-dessous.

Soit Ecar(x,y,z,t) le champ électromagnétique du faisceau à caractériser Fcar. Soit Eref(x,y,z,t) le champ électromagnétique du faisceau de référence Fref, dont l'expression exacte peut éventuellement rester indéterminée, ou bien être précisément déterminée, selon une variante ultérieurement décrite. Ainsi que précédemment décrit, le champ électromagnétique Eref(x,y,z,t) du faisceau de référence Fref peut être décalé d'un délai temporel $\tau$, ou retard, variable par rapport au champ électromagnétique Ecar(x,y,z,t) du faisceau à caractériser Fcar.

Les champs électromagnétiques Ecar(x,y,z,t) et Eref(x,y,z,t) du faisceau à caractériser Fcar et du faisceau de référence Fref peuvent être définis de manière complexe, c'est-à-dire sous la forme générale : $E(t) = \hat{E} \exp(i\omega_L t)$, avec $\hat{E}$ l'enveloppe complexe et $\omega_L$ la fréquence porteuse.

En un point (x,y,z1) du premier plan z1, le champ total Etot(x,y,z1,t), résultant de la superposition du champ Ecar(x,y,z,t) du faisceau à caractériser Fcar et du champ Eref(x,y,z,t) du faisceau de référence Fref, vaut :

$$Etot(x, y, z1, t) = Ecar(x, y, z1, t) + Eref(x, y, z1, t - \tau)$$

On mesure l'interférogramme temporel S1, c'est-à-dire la quantité de lumière incidente en chaque point du premier plan z1, intégrée dans le temps, qui est donc proportionnelle à :

$$S1(x, y, \tau) = \int |Ecar(x, y, z1, t) + Eref(x, y, z1, t - \tau)|^2 dt$$

On obtient donc :

$$S1(x, y, \tau) = \varepsilon1 + \varepsilon2$$
$$+ \int Ecar(x, y, z1, t) \times Eref^*(x, y, z1, t - \tau)dt$$
$$+ \int Ecar^*(x, y, z1, t) \times Eref(x, y, z1, t - \tau)dt$$

où $\varepsilon1$ et $\varepsilon2$ sont les signaux respectivement obtenus avec le faisceau à caractériser Fcar seul et avec le faisceau de référence Fref seul au point (x,y) du plan de mesure z1.

Lorsque l'on mesure l'interférogramme temporel S1(x,y,$\tau$) en fonction de $\tau$, on obtient donc trois termes.

Le premier terme, $\varepsilon1 + \varepsilon2$, indépendant de $\tau$, est la somme incohérente du faisceau à caractériser Fcar et du faisceau de référence Fref.

Le deuxième terme, noté $J(x, y, \tau) = \int Ecar(x, y, z1, t) \times Eref^*(x, y, z1, t - \tau)dt$, est la fonction de corrélation croisée entre le champ électromagnétique Ecar(x,y,z1,t) du faisceau à caractériser et le champ électromagnétique Eref(x,y,z1,t) du faisceau de référence.

Le troisième terme, noté $J^*(x, y, \tau) = \int Ecar^*(x, y, z1, t)Eref(x, y, z1, t - \tau)dt$, est le conjugué du deuxième terme, c'est-à-dire la fonction de corrélation croisée entre le champ électromagnétique Eref(x,y,z1,t) du faisceau de référence et le champ électromagnétique Ecar(x,y,z1 ,t) du faisceau à caractériser.

En utilisant la décomposition en enveloppe complexe et porteuse, on obtient pour le deuxième terme J(x,y,$\tau$) :

$$J(x, y, \tau) = e^{i\omega_L t} \int \hat{E}car(x, y, z1, t) \times \hat{E}ref^*(x, y, z1, t - \tau)dt$$

La fonction J(x,y,$\tau$) oscille donc à la fréquence $\omega_L$ en fonction de $\tau$, alors que sa conjuguée oscille à la fréquence $-\omega_L$ en fonction de $\tau$. En effectuant la transformée de Fourier de S1 (x,y, $\tau$) par rapport à $\tau$, on obtient donc trois pics, correspondant aux trois termes de la somme ci-dessus, centrés respectivement aux fréquences de 0, $\omega_L$, et $-\omega_L$. Ce point est illustré en particulier à la figure 7b, précédemment décrite.

On peut alors sélectionner le pic correspondant à la transformée de Fourier de J(x,y, τ).

D'après l'équation précédente pour J(x,y, τ) et le thérorème de corrélation croisée (ou « cross-correlation theorem » en anglais), la transformée de Fourier J'(x,y,ω) par rapport à la variable τ de la fonction J(x,y, τ) est donnée par la relation :

$$ J'(x, y, \omega) = \hat{E}car'(x, y, z1, \omega) \times \hat{E}ref'^{*}(x, y, z1, \omega) \otimes \delta(\omega - \omega_L) $$

où les fonctions notées « ' » correspondent aux transformées de Fourier par rapport à τ. Autrement dit, en effectuant la transformation de Fourier de S1 (x,y, τ) par rapport à τ, et en sélectionnant le pic fréquentiel latéral centré en $\omega_L$ de cette transformée de Fourier, on obtient le produit du spectre du champ électromagnétique du faisceau à caractériser, $\hat{E}car'(x,y,z1,\omega)$, et du spectre conjugué du champ électromagnétique du faisceau de référence, $\hat{E}ref^{*}(x,y,z1,\omega)$. On remarque que le pic fréquentiel latéral centré en - $\omega_L$ peut également être choisi. On obtient alors le produit du spectre conjugué du champ électromagnétique du faisceau à caractériser, et du spectre du champ électromagnétique du faisceau de référence. Le choix du pic fréquentiel latéral sélectionné détermine simplement la convention de signe à appliquer aux résultats obtenus par la suite.

Ainsi que décrit plus-haut, cette mesure donne donc accès, en utilisant les définitions de l'amplitude spectrale et de la phase spatio-spectrale :

- au produit des amplitudes spectrales du champ électromagnétique du faisceau à caractériser et du champ électromagnétique du faisceau de référence,
- et à la différence des phases spatio-spectrales du champ électromagnétique du faisceau à caractériser et du champ électromagnétique du faisceau de référence.

Une première variante du premier mode de réalisation de l'invention est à présent décrite. Ladite première variante permet avantageusement de prendre en compte d'éventuelles fluctuations des propriétés, telles que l'intensité et/ou la distribution spatiale de l'intensité, de la source de lumière SL au cours du temps, c'est-à-dire typiquement d'une impulsion à l'autre dans le cas d'une source de lumière SL impulsionnelle. D'éventuelles fluctuations de l'intensité et/ou de la distribution spatiale de l'intensité de la source de lumière SL pendant l'intervalle de temps T1 de balayage sont en effet susceptibles de dégrader les motifs d'interférences bidimensionnels M1 mesurés, et donc les spectres complexes qui en sont déduits.

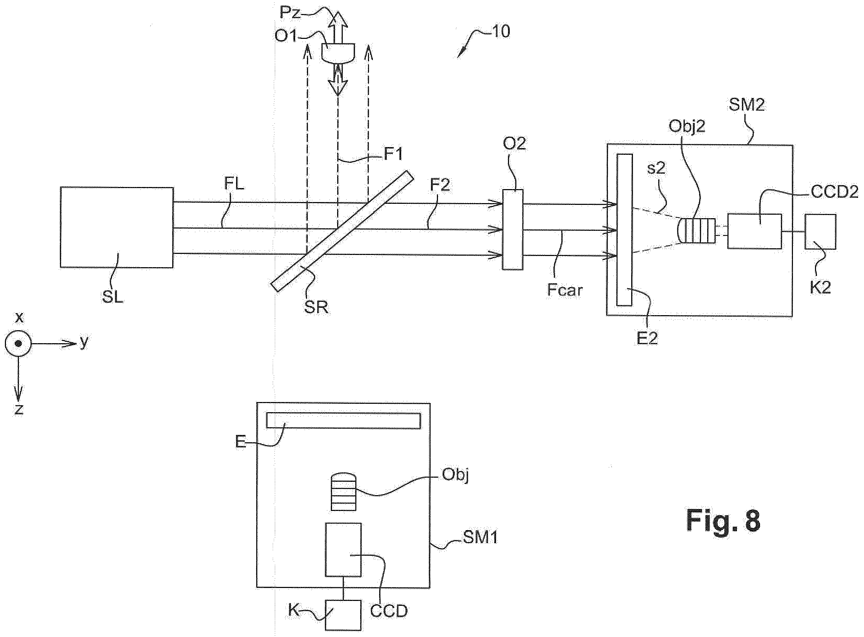

Dans cette première variante, le procédé 10 de caractérisation d'un faisceau de lumière selon le premier mode de l'invention comporte une étape g), illustrée à la figure 8, de calcul d'au moins une propriété, telle que l'intensité et/ou la distribution spatiale de l'intensité, de la source de lumière SL au cours du temps. Dans le cas d'un calcul de la distribution spatiale de l'intensité, ledit calcul peut alors être utilisé pour corriger, au moins partiellement, l'effet d'une éventuelle fluctuation de la distribution spatiale de l'intensité de la source de lumière SL sur la mesure interférométrique réalisée. Pour calculer au moins une propriété de la source de lumière SL, on peut effectuer un simple prélèvement sur le faisceau de lumière FL et imager ledit prélèvement. Ceci peut par exemple être réalisé en plaçant une optique séparatrice sur le trajet du faisceau de lumière FL, en amont de l'optique SR. Cette solution n'est cependant pas idéale, car pour un faisceau ultrabref de grand diamètre, ladite optique séparatrice est susceptible d'affecter significativement les propriétés spatio-temporelles du faisceau de lumière FL. Une solution préférentielle consiste à utiliser une deuxième optique 02 seulement partiellement réfléchissante, c'est-à-dire par exemple une lame de verre nue. Il est alors possible de mesurer le profil spatial d'intensité du faisceau à caractériser Fcar sur la partie transmise à travers la deuxième optique 02, ladite partie transmise n'étant pas utilisée par la suite à des fins d'interférence. L'utilisation d'une optique partiellement réfléchissante permet en outre de contribuer à un meilleur équilibrage des énergies du faisceau à caractériser Fcar et du faisceau de référence Fref, et donc d'obtenir un meilleur contraste pour les motifs d'interférences bidimensionnels M1.

Dans l'exemple particulier représenté à la figure 8, l'étape g) est réalisée après la première étape a) de séparation du faisceau de lumière FL, et avant la troisième étape c) de recombinaison du faisceau de référence Fref et du faisceau à caractériser Fcar. Le montage optique de la figure 8 comporte, par rapport au montage optique précédemment décrit en lien avec les figures 2a à 2c :

- une deuxième optique 02 permettant également de transmettre une partie du faisceau à caractériser Fcar, par exemple une lame de verre nue ;
- un deuxième système de mesure SM2 et, optionnellement, un deuxième calculateur K2.

Selon la première variante, à l'issue de ladite première étape a), le deuxième sous-faisceau F2 se propage vers la deuxième optique 02. La deuxième optique 02 réfléchit une première partie du deuxième sous-faisceau F2, et transmet une deuxième partie du deuxième sous-faisceau F2. La première partie du deuxième sous-faisceau F2 qui est réfléchie est une première partie du faisceau à caractériser Fcar et se propage vers l'optique SR afin d'être recombinée avec le faisceau de référence Fref, ainsi que précédemment décrit. La deuxième partie du faisceau à caractériser Fcar qui est transmise est une deuxième partie du faisceau à caractériser Fcar et se propage vers le deuxième système de mesure SM2.

Le deuxième système de mesure SM2 est agencé de sorte que la deuxième partie du faisceau à caractériser Fcar parvienne sur ledit deuxième système de mesure SM2 sous une incidence sensiblement normale. Le deuxième système de mesure SM2 est par ailleurs analogue au premier système de mesure SM1 précédemment décrit en lien avec les figures 2a à 2c. Le deuxième système de mesure comporte ainsi, en fonction de la taille de la deuxième partie du faisceau à caractériser Fcar :

- uniquement un deuxième capteur CCD, référencé « CCD2 » ;
- ou, en plus du deuxième capteur CCD2, un deuxième écran diffusant E2 et un deuxième objectif Obj2. C'est ce cas qui est plus particulièrement représenté sur la figure 8.

Le deuxième écran diffusant E2, ici agencé parallèlement au plan Oxz, diffuse un signal s2 de la deuxième partie du faisceau à caractériser Fcar. Le deuxième objectif Obj2 capte ledit signal s2 et forme une image réduite de la deuxième partie du faisceau à caractériser Fcar sur le deuxième capteur CCD2. Le deuxième capteur CCD2 enregistre alors une image de la deuxième partie du faisceau à caractériser Fcar. Ladite image peut alors être transmise au calculateur K précédemment décrit, ou alternativement à un deuxième calculateur K2, pour l'analyse des propriétés de la deuxième partie du faisceau à caractériser Fcar. Les propriétés de ladite deuxième partie du faisceau à caractériser Fcar sont caractéristiques des propriétés du flux de lumière FL.

L'étape g) qui vient d'être décrite peut être réalisée au moins une fois pour chaque délai temporel $\tau$ balayant l'intervalle de temps T1 avec le pas P1, c'est-à-dire au moins N fois. En particulier, dans le cas d'une source de lumière SL impulsionnelle, l'étape g) qui vient d'être décrite peut être réalisée pour chaque impulsion. Afin de minimiser la durée du balayage, on utilise préférentiellement une seule impulsion par délai temporel $\tau$. Toutefois, pour un délai temporel $\tau$ donné de l'intervalle de temps T1, plusieurs impulsions peuvent alternativement être utilisées.

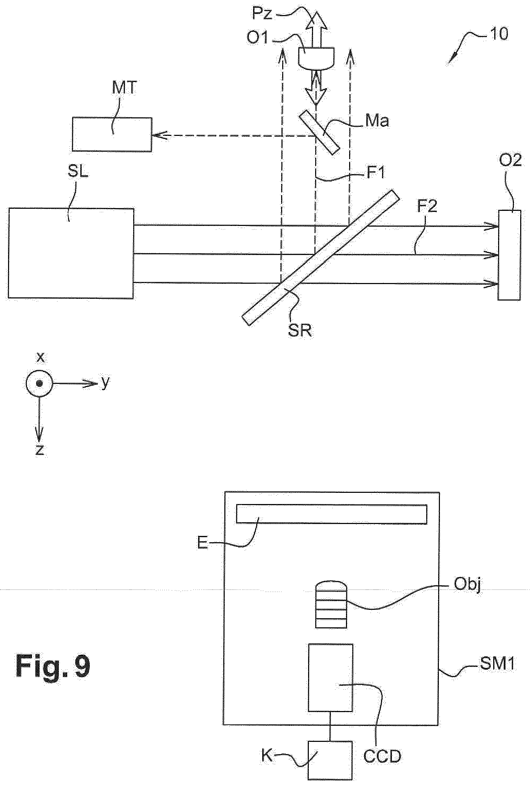

Une deuxième variante du premier mode de réalisation de l'invention est à présent décrite, en lien avec la figure 9. Ladite deuxième variante permet avantageusement d'obtenir une caractérisation absolue du faisceau à caractériser Fcar, indépendamment du faisceau de référence Fref. Il est à noter que les première et deuxième variantes peuvent être combinées ou utilisées indépendamment l'une de l'autre.

Il s'agit, pour parvenir à une caractérisation absolue du faisceau à caractériser Fcar, de mesurer :

- la phase spatio-spectrale $\varphi$ref(x,y,$\omega$) du faisceau de référence Fref, et
- l'amplitude spectrale $A_{ref}(\omega)$ du faisceau de référence Fref.

On peut en effet, connaissant lesdites phase spatio-spectrale $\varphi_{ref}(x,y,\omega)$ et amplitude spectrale $A_{ref}(\omega)$ du faisceau de référence Fref, déterminer la phase spatio-spectrale absolue et l'amplitude spectrale absolue du faisceau à caractériser Fref, et ce en tout point (x,y) où la mesure de l'interférogramme temporel S1 a été effectuée.

Dans cette deuxième variante, le procédé 10 de caractérisation d'un faisceau de lumière selon le premier mode de l'invention comporte ainsi :

- une étape i), illustrée à la figure 9, de mesure de la phase spatio-spectrale $\varphi_{ref}(x,y,\omega)$ du premier sous-faisceau F1, et
- une étape de mesure de l'amplitude spectrale $A_{ref}(x,y,\omega)$ du premier sous-faisceau F1.

Les deux étapes qui viennent d'être décrites peuvent typiquement être réalisées de manière simultanée par un même dispositif.

Dans l'exemple particulier représenté à la figure 9, l'étape i) est réalisée après la première étape a), au cours de laquelle le faisceau de lumière FL est séparé en le premier sous-faisceau F1 et le deuxième sous-faisceau F2, et avant la deuxième étape b), au cours de laquelle le premier sous-faisceau F1 est réfléchi par la première optique O1. Le montage optique de la figure 9 comporte, par rapport au montage optique précédemment décrit en lien avec les figures 2a à 2c :

- un système de mesure temporelle MT ;
- un miroir amovible Ma, permettant lorsqu'il est en place de diriger au moins une partie du faisceau de référence vers le système de mesure temporelle MT.

Selon la deuxième variante, le miroir amovible Ma est agencé sur le premier chemin optique C1 du premier sous-faisceau F1 de sorte que, à l'issue de la première étape a), au moins une partie dudit premier sous-faisceau F1 se propage vers le système de mesure temporelle MT. Alternativement au miroir amovible Ma, l'utilisation d'une optique non-amovible semi-réfléchissante, permettant de transmettre une première partie du premier sous-faisceau F1 et de réfléchir une deuxième partie du premier sous-faisceau F1, peut être envisagée. Toutefois, toute transmission d'un faisceau à travers une optique ayant généralement un impact sur les propriétés dudit faisceau, on préfère utiliser le miroir amovible Ma. Le système de mesure temporelle MT peut par exemple utiliser :

- un dispositif FROG (de l'anglais « Frequency-Resolved Optical Gating »),
- un dispositif SPIDER (de l'anglais « Spectral Phase Interferometry for Direct Electric field Reconstruction »), ou
- un dispositif d'interférométrie spectrale auto-référencée SRSI (de l'anglais « Self-Referenced Spectral interferometry »).

On obtient ainsi, à l'issue de l'étape i) qui vient d'être décrite, une mesure de la phase spatio-spectrale $\varphi_{ref}(x,y,\omega)$ du premier sous-faisceau F1. On peut alors, en soustrayant ladite phase spatio-spectrale $\varphi ref(x,y,\omega)$ à la phase spatio-spectrale relative $\varphi_R(x,y,\omega)$, par exemple au moyen du calculateur K, accéder à la phase spatio-spectrale du faisceau à caractériser Fcar, dite « phase spatio-spectrale absolue ».

L'amplitude spectrale $A_{ref}(\omega)$ peut typiquement être mesurée grâce au système de mesure temporelle MT utilisé pour mesurer la phase spatio-spectrale $\varphi_{ref}(x,y,\omega)$, ou alternativement être mesurée en utilisant un spectromètre.

On obtient ainsi une mesure de l'amplitude spectrale $A_{ref}(\omega)$ du faisceau de référence Fref. On peut alors, en divisant l'amplitude spectrale relative $A_R(\omega)$ par l'amplitude spectrale $A_{ref}(\omega)$ du faisceau de référence Fref, accéder à l'amplitude spectrale du faisceau à caractériser Fcar, dite « amplitude spectrale absolue ».

Complémentairement à la description qui vient d'être faite de la première variante du premier mode de réalisation de l'invention, une analyse mathématique de ladite première variante est présentée ci-dessous. Le procédé 10 de caractérisation d'un faisceau de lumière selon le premier mode de réalisation de l'invention permet en effet d'obtenir un champ électromagnétique du faisceau de référence ayant une expression simple, et pouvant donc être déterminée expérimentalement selon ladite deuxième variante.

Soient (x0,y0) les coordonnées du point de référence dans le deuxième plan z2 de la première optique O1, c'est-à-dire du point générant le faisceau de référence Fref qui interfère effectivement avec le faisceau à caractériser Fcar dans le premier plan z1 de mesure du motif d'interférence bidimensionnel M1 pour chaque délai temporel $\tau$. Il est effet possible de considérer que ledit point de référence (x0,y0) est un point source, dont le champ électromagnétique est homogène, dans la mesure où le faisceau de référence Fref interférant avec le faisceau à caractériser Fcar dans le premier plan z1 est issu d'une partie dudit faisceau de référence Fref dans le deuxième plan z2 qui est petite par rapport au faisceau à caractériser Fcar dans le premier plan z1. En pratique, la superficie de ladite partie du faisceau de référence Fref dans le deuxième plan z2 est typiquement de l'ordre de 10% de la superficie du faisceau à caractériser Fcar dans le premier plan z1. La superficie de ladite petite partie du faisceau de référence Fref dans le deuxième plan z2 n'est pas nécessairement égale à la surface de la première optique O1.

Nous notons le champ de point de référence, dans le deuxième plan z2, de la manière suivante :

$$Pref(t) = Pref(x0, y0, z2, t)$$

Le champ électromagnétique du faisceau de référence Fref dans le premier plan z1 de mesure peut alors être approximé par :

$$Eref(x, y, z1, t) = Pref(t - r/c)$$

où r est la distance entre le point de référence, de coordonnées (x0,y0,z2), et chaque point (x,y) du premier plan z1 de mesure, de coordonnées (x,y,z1). La distance r(x,y) peut donc être calculée géométriquement, et est donnée par la relation :

$$r(x, y) = \sqrt{(D + f)^2 + x^2 + y^2}$$

où D = z1-z2 est la distance entre la première optique O1 et le premier plan z1, et f est la distance focale de la première optique O1. En pratique, on a typiquement : D»f. Dans l'exemple particulier de réalisation ici décrit, D = 3 m, et f = 250 mm. Le spectre du champ électromagnétique du faisceau de référence dans le premier plan z1 est donc donné par la relation :

$$\hat{E}ref'(x,y,z1,\omega) = \hat{P}ref'(\omega) \times exp\left[i \times \frac{\omega}{c} \times r(x,y)\right]$$

La caractérisation de $\hat{E}car'(x,y,z1,\omega)$ en amplitude et en phase nécessite de connaître $\hat{E}ref'(x,y,z1,\omega)$, ce qui passe donc par la mesure de $\hat{P}ref'(\omega)$, encore une fois en amplitude et phase. Cette mesure du champ électromagnétique complexe en un point peut tout à fait être réalisée à l'aide de la technologie existante, aujourd'hui mise en oeuvre dans des appareils commerciaux, utilisant des méthodes FROG, SPIDER ou SRSI, précédemment mentionnées.

Une troisième variante du premier mode de réalisation de l'invention est à présent décrite. Ladite troisième variante permet avantageusement de prendre en compte la courbure du front d'onde du faisceau de référence Fref qui est éventuellement introduite par la première optique O1 et/ou la courbure du front d'onde du faisceau à caractériser Fcar qui est éventuellement introduite par la deuxième optique 02. Dans l'exemple de réalisation qui a été décrit jusqu'à présent, le premier sous-faisceau F1 en entrée de la première optique O1 est une plane, et le faisceau de référence Fref en sortie de la première optique O1 est une onde sphérique. Ainsi, on décrit plus particulièrement le cas où la troisième variante prend en compte la courbure du front d'onde du faisceau de référence Fref qui est introduite par la première optique O1. Il est à noter que ladite troisième variante peut être combinée avec la première variante et/ou avec la deuxième variante, précédemment décrites, ou mise en oeuvre indépendamment desdites première et deuxième variantes.

Selon ladite troisième variante, on réalise, après la réflexion du premier sous-faisceau F1 sur la première optique O1 et avant la recombinaison du faisceau de référence Fref avec le faisceau à caractériser Fcar, une mesure de la phase spatiale à une fréquence $\omega_0$ donnée du faisceau de référence $\varphi_{ref}(x,y,\omega_0)$. Un dispositif de Shack-Hartmann peut typiquement être utilisé pour réaliser la mesure de la phase spatiale du faisceau de référence. Ladite phase spatiale $\varphi_{ref}(x,y,\omega_0)$ est caractéristique de la courbure du front d'onde du faisceau de référence Fref introduite par la première optique O1.

On peut alors soustraire, par exemple au moyen du calculateur K, la phase spatio-spectrale $\frac{\omega}{\omega_0}\varphi_{ref}(x,y,\omega_0)$ à la phase spatio-spectrale relative ou à la phase spatio-spectrale absolue du faisceau à caractériser Fcar, précédemment obtenues, pour l'obtention respectivement d'une phase spatio-spectrale relative corrigée ou d'une phase spatio-spectrale absolue corrigée du faisceau à caractériser Fcar.

Une alternative à cette troisième variante peut être envisagée, qui est à présent décrite, en lien avec la figure 3. La figure 3 montre un deuxième dispositif 2 de caractérisation d'un faisceau de lumière, qui peut alternativement être mis en oeuvre dans le procédé 10 selon le premier mode de réalisation de l'invention. Le dispositif 2 comporte :

- une optique séparatrice Os pour la séparation du faisceau de lumière FL en le premier sous-faisceau F1 et le deuxième sous-faisceau F2 ;
- la première optique O1 ;
- une optique correctrice de front d'onde Cor et une troisième optique 03 ;
- la deuxième optique 02, qui comporte avantageusement des premier, deuxième, troisième et quatrième miroirs mi1, mi2, mi3 et mi4 ;
- le moyen de contrôle Pz d'un délai temporel $\tau$ ;
- une optique recombinatrice Or pour la recombinaison du faisceau de référence Fref et du faisceau à caractériser Fcar ;
- le système de mesure SM1 ;
- et le calculateur K.

La première optique O1 est agencée sur le chemin optique du premier sous-faisceau F1, en aval de l'optique séparatrice Os. L'optique correctrice de front d'onde est agencée sur le chemin optique du faisceau de référence Fref, en aval de la première optique O1. La troisième optique 03, qui est typiquement un miroir plan, est agencée sur le chemin optique du faisceau de référence Fref, en aval de l'optique correctrice de front d'onde et en amont de l'optique recombinatrice Or. Les premier, deuxième, troisième et quatrième miroirs mi1 à mi4 qui forment la deuxième optique 02 sont agencés sur le chemin optique du deuxième sous-faisceau F2, en aval de l'optique séparatrice Os. L'optique recombinatrice Or est agencée à la fois sur le chemin optique du faisceau de référence Fref, en aval de la troisième optique 03, et sur le chemin optique du faisceau à caractériser Fcar, en aval du quatrième miroir mi4 de la deuxième optique 02.

L'optique correctrice de front d'onde Cor permet avantageusement de corriger la courbure du front d'onde du faisceau de référence Fref, qui est due à la réflexion dudit faisceau de référence Fref sur la première optique O1, et d'obtenir un front d'onde plan pour ledit faisceau de référence Fref. On contribue ainsi avantageusement à l'obtention de franges d'interférences moins serrées pour le motif d'interférence bidimensionnel M1 entre le faisceau de référence Fref et le faisceau à caractériser Fcar. Augmenter l'espacement entre lesdites franges d'interférences permet de diminuer la contrainte en résolution spatiale pour le système de mesure SM1. En effet, plus les franges d'interférences sont serrées, plus la résolution spatiale du système de mesure SM1 doit être élevée. Augmenter l'espacement entre lesdites franges d'interférences permet également de diminuer l'intervalle temporel à scanner.

Il s'agit pour cela d'introduire l'optique correctrice de front d'onde Cor sur le chemin optique du faisceau de référence Fref, en aval de la première optique O1 et en amont de l'optique recombinatrice Or. Grâce à la configuration alternative illustrée à la figure 3, l'introduction d'une telle optique correctrice dans le montage optique n'a pas d'influence sur le faisceau à caractériser Fcar. L'optique correctrice de front d'onde Cor peut typiquement être :

- une lentille convergente agencée de telle sorte que la première optique O1 se trouve au foyer principal objet de la lentille convergente, ou
- un télescope comportant un miroir divergent et un miroir convergent, et permettant d'étendre le faisceau de référence Fref tout en conservant un front d'onde plan pour le faisceau de référence Fref.

Le faisceau de référence Fref en sortie de l'optique correctrice Cor est alors parallèle et présente des fronts d'ondes sensiblement plans.

Le dispositif 2 comporte avantageusement les premier, deuxième, troisième et quatrième miroirs mi1, mi2, mi3 et mi4, formant la deuxième optique 02. Le premier miroir mi1 est agencé en aval de l'optique séparatrice Os sur le chemin optique du deuxième sous-faisceau F2. Le premier miroir mi1 permet de diriger le deuxième sous-faisceau F2 vers le moyen de contrôle Pz. Dans la configuration particulière ici décrite, le moyen de contrôle Pz permet d'ajuster simultanément le positionnement des deuxième et troisième miroirs mi2 et mi3 selon l'axe z. Le moyen de contrôle Pz comporte avantageusement une unique platine piézoélectrique pour le déplacement précis, simultané et identique des deuxième et troisième miroirs mi2 et mi3. Alternativement, le moyen de contrôle Pz peut comporter une platine piézoélectrique pour chacun des deuxième et troisième miroirs mi2 et mi3. En sortie du troisième miroir mi3, le deuxième sous-faisceau F2 est dirigé vers le quatrième miroir mi4. Le quatrième miroir mi4 permet de diriger le deuxième sous-faisceau F2 vers l'optique recombinatrice Or. Grâce à l'ensemble qui vient d'être décrit des premier, deuxième, troisième et quatrième miroirs mi1 à mi4 et du moyen de contrôle Pz, le délai temporel $\tau$ entre le faisceau de référence Fref et le faisceau à caractériser Fcar peut avantageusement être contrôlé précisément tout en conservant l'alignement du montage optique. En effet, la translation selon l'axe z des deuxième et troisième miroirs mi2 et mi3, contrôlée par le moyen de contrôle Pz, ne nécessite aucun réalignement des premier et quatrième miroirs mi1 et mi4 ni de tout autre élément optique.

Une quatrième variante du premier mode de réalisation de l'invention est à présent décrite. Ladite quatrième variante permet avantageusement d'identifier d'éventuels points (x,y) du faisceau à caractériser Fcar dans le premier plan z1 de mesure pour lesquels les spectres du faisceau à caractériser Fcar et du faisceau de référence Fref ne se recouvrent pas, ou se recouvrent seulement partiellement. En effet, pour de tels points (x,y), il ne se produit aucune interférence entre le faisceau à caractériser Fcar et le faisceau de référence Fref, et le procédé 10 de caractérisation d'un faisceau de lumière selon le premier mode de réalisation de l'invention rencontre une limite. Ces cas, rares, peuvent néanmoins se produire pour certains types de couplages spatio-temporels, par exemple si le faisceau à caractériser Fcar présente du « chirp » spatial, ou dérive de fréquence spatiale, dans le premier plan z1 de mesure, c'est-à-dire si l'amplitude spectrale du faisceau à caractériser Fcar varie spatialement. Il est à noter que ladite quatrième variante peut être combinée avec la première variante et/ou avec la deuxième variante et/ou avec la troisième variante précédemment décrites, ou mise en oeuvre indépendamment desdites première, deuxième et troisième variantes

On propose ainsi, dans la quatrième variante du premier mode de réalisation de l'invention, d'utiliser une première optique O1 plane et une deuxième optique O2 plane. Le faisceau de référence Fref est alors identique au faisceau à caractériser Fcar, donc le montage optique obtenu permet de faire interférer chaque point du faisceau à caractériser avec lui-même. Il est alors possible de réaliser une spectroscopie de Fourier résolue spatialement. La transformée de Fourier de l'interférogramme temporel mesuré en chaque point du faisceau à caractériser Fcar permet d'accéder à l'intensité spectrale du faisceau à caractériser en chacun de ses points. D'éventuels problèmes de chirp spatial en certains points du faisceau peuvent alors être détectés, permettant ainsi d'identifier des éventuelles limitations de la reconstruction du faisceau à caractériser Fcar, réalisée par le procédé 10 selon le premier mode de réalisation de l'invention.

Une cinquième variante du premier mode de réalisation de l'invention est à présent décrite, qui permet avantageusement d'éliminer, au moins partiellement, les éventuels points (x,y) du faisceau à caractériser Fcar dans le premier plan z1 de mesure pour lesquels les spectres du faisceau à caractériser Fcar et du faisceau de référence Fref ne se recouvrent pas, ou se recouvrent seulement partiellement. Il est à noter que ladite cinquième variante peut être combinée avec une ou plusieurs des première, deuxième, troisième et quatrième variantes précédemment décrites, ou mise en oeuvre indépendamment desdites première, deuxième, troisième et quatrième variantes.

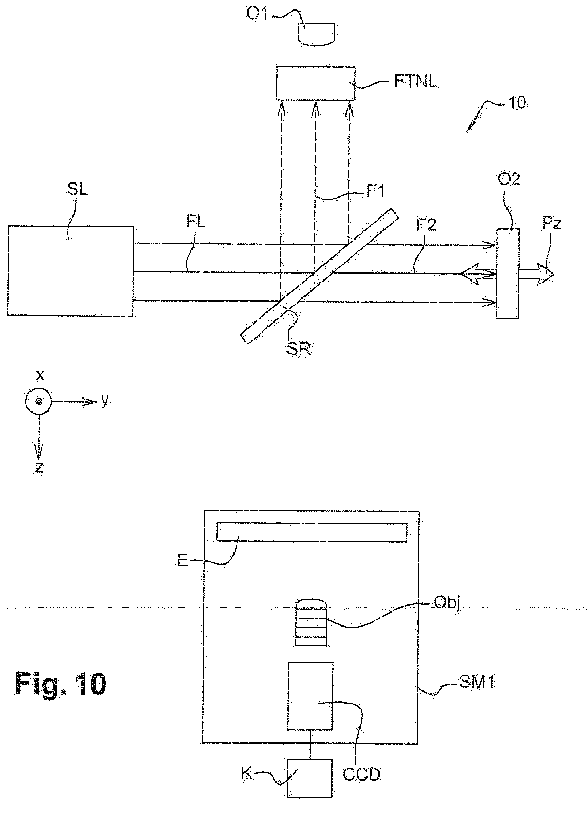

On propose ainsi, dans la cinquième variante du premier mode de réalisation de l'invention, d'ajouter une étape de filtrage du premier sous-faisceau F1, afin d'augmenter la qualité dudit premier sous-faisceau F1. Ladite étape de filtrage peut typiquement consister en l'introduction d'un élément optique non-linéaire sur le chemin optique du premier sous-faisceau F1. La figure 10 illustre schématiquement le montage optique précédemment décrit en lien avec les figures 2a, 2b et 2c, et dans lequel un élément optique non-linéaire FRNL est agencé sur le chemin optique du premier sous-faisceau F1. Ledit élément optique non-linéaire est choisi afin de permettre la génération, en sortie de l'élément optique non-linéaire, d'un premier sous-faisceau filtré contenant toutes les composantes spectrales du premier sous-faisceau initial, de façon à pouvoir interférer de manière optimale avec le faisceau à caractériser Fcar. D'une manière générale, il s'agit que le spectre du premier sous-faisceau filtré comprenne le spectre du premier sous-faisceau non-filtré. Une telle étape de filtrage s'appuie typiquement sur un processus non-linéaire du troisième ordre, dit « XPW ». Du fait de sa non-linéarité d'ordre 3, le processus XPW élargit fortement le spectre du faisceau de référence Fref incident. On contribue ainsi à limiter significativement les éventuels problèmes de recouvrement spectraux entre le faisceau de référence Fref et le faisceau à caractériser Fcar. En outre, il a été démontré que le processus XPW agit comme un filtre temporel, si bien que lorsque le faisceau de référence incident n'est pas trop loin de sa limite de Fourier, le faisceau de référence filtré en sortie de l'élément optique non-linéaire peut être considéré comme limité par Transformée de Fourier. Autrement dit, si la phase spatio-spectrale du faisceau de référence incident est relativement plate et qu'on étend ledit faisceau de référence par le processus XPW, alors on peut considérer que le faisceau de référence filtré présente également une phase spatio-spectrale plate. Ceci permettrait donc potentiellement de s'affranchir de l'étape de mesure de la phase spatio-spectrale de la référence.

Une sixième variante du premier mode de réalisation de l'invention est à présent décrite, qui permet avantageusement de prendre en compte d'éventuels couplages spatio-temporels résiduels sur le faisceau de référence Fref. Il est à noter que ladite sixième variante peut être combinée avec une ou plusieurs des première, deuxième, troisième, quatrième et cinquième variantes précédemment décrites, ou mise en oeuvre indépendamment desdites première, deuxième, troisième, quatrième et cinquième variantes.

Dans le premier mode de réalisation de l'invention, supposition est faite que le champ électromagnétique du premier sous-faisceau F1 en amont de la surface de la première optique O1 est uniforme. La première optique O1 a cependant une surface finie, et son diamètre ne peut pas être choisi trop petit, sans quoi le rapport de signal entre le faisceau de référence en aval de la première optique O1 et le faisceau à caractériser sera trop différent de 1 pour observer un motif d'interférence bidimensionnel avec un bon contraste. Dans ces conditions, les couplages spatio-temporels du premier sous-faisceau F1 en amont de la première optique O1 ne sont pas systématiquement suffisamment faibles pour que l'on puisse considérer que le champ électromagnétique dudit premier sous-faisceau F1 est homogène sur l'ensemble de la surface de la première optique O1. Cette approximation peut donc induire des erreurs sur le champ électromagnétique du faisceau à caractériser Fcar finalement reconstruit.

On propose ainsi, dans la sixième variante du premier mode de réalisation de l'invention, d'utiliser l'algorithme itératif suivant :

i. on suppose que le champ électromagnétique du premier sous-faisceau F1 est effectivement homogène sur la première optique O1, et on en déduit le champ électromagnétique du faisceau de référence Fref dans le plan de mesure z1, comme décrit précédemment ;

ii. connaissant ledit champ du faisceau de référence Fref dans le plan de mesure z1 et en utilisant les interférogrammes temporels S1 mesurés grâce au procédé 10 selon le premier mode de réalisation de l'invention, on déduit une reconstruction du champ du premier sous-faisceau F1 en espace et en temps, ou en espace et en fréquence ;

iii. cette reconstruction du champ du premier sous-faisceau F1 comprend la partie du champ du premier sous-faisceau F1 qui se réfléchit sur la première optique O1 pour produire le champ du faisceau de référence Fref dans le plan de mesure z1, et qui n'est pas nécessairement homogène spatialement à cette échelle. On utilise cette reconstruction pour déterminer un nouveau champ du faisceau de référence dans le plan de mesure z1, qui cette fois n'est plus basé sur l'hypothèse que le champ du premier sous-faisceau F1 est homogène sur l'ensemble de la surface de la première optique O1.

On réinjecte alors ce nouveau champ du faisceau de référence Fref à l'étape ii, et on répète de façon itérative les étapes ii et iii, jusqu'à converger vers une solution auto-consistante telle que :

- le champ électromagnétique du faisceau à caractériser Fcar est reconstruit, et
- le champ électromagnétique du faisceau de référence dans le premier plan z1 de mesure est le résultat de l'expansion de ce champ, potentiellement inhomogène même sur une surface restreinte, par la première optique O1.

Le type d'algorithme itératif qui vient d'être exposé est plus particulièrement décrit dans l'article de T. Oksenhendler et al, « Self-referenced spectral interferometry », Applied Physics B (99), 7-12.

Un deuxième exemple non conforme à l'invention, dit « mode mono-coup » est à présent décrit.

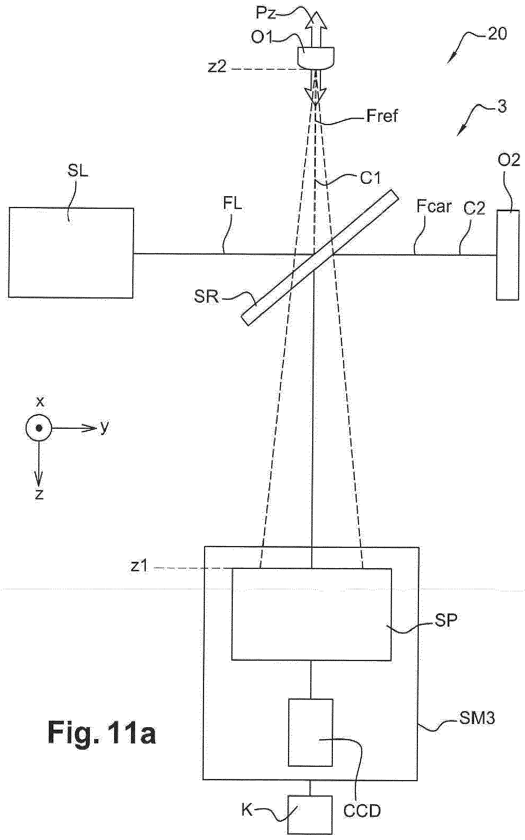

La figure 11a illustre un procédé 20 de caractérisation d'un faisceau de lumière selon un deuxième exemple, utilisant un troisième dispositif 3 de caractérisation d'un faisceau de lumière.

Le troisième dispositif 3 comporte un système de mesure SM3 d'un deuxième type, comprenant :

- un spectromètre SP ayant une fente d'entrée Fe ;
- le capteur CCD d'une caméra tel que précédemment décrit pour les premier et deuxième systèmes de mesure SM1 et SM2.

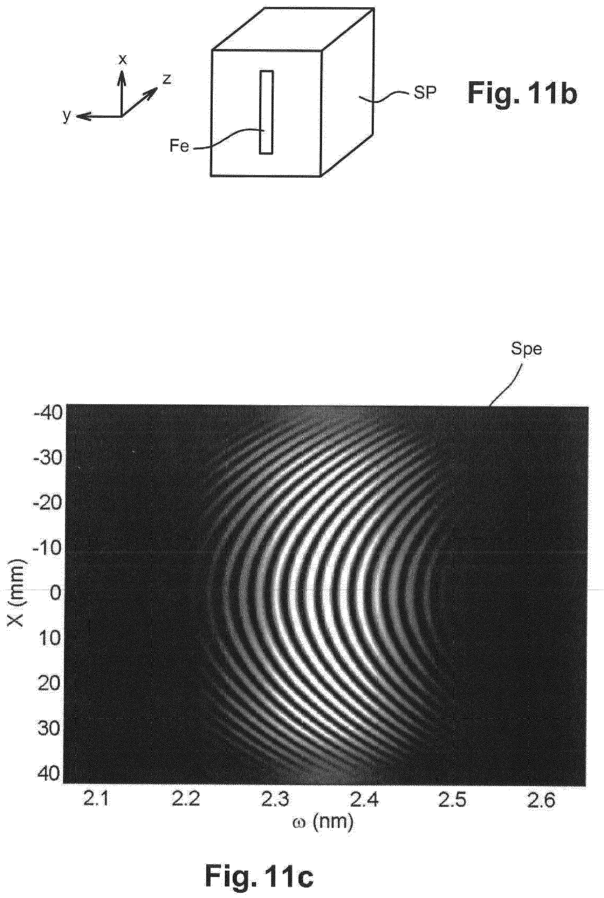

La figure 11b montre une vue partielle en perspective du troisième dispositif 3 de caractérisation d'un faisceau de lumière. La figure 11b montre ainsi le spectromètre SP ayant sa fente d'entrée Fe orientée suivant la direction x.

La figure 11c montre un exemple de spectre fréquentiel Spe d'un motif d'interférence bidimensionnel M1 pour un délai temporel $\tau$ donné, mesuré expérimentalement par le spectromètre SP lors d'une étape du procédé 20 de caractérisation d'un faisceau de lumière selon le deuxième mode de réalisation de l'invention. Le spectre fréquentiel Spe de la figure 11c comporte ainsi une information fréquentielle pour la direction x dans laquelle le motif d'interférence bidimensionnel M1 a été capté par la fente Fe du spectromètre SP.

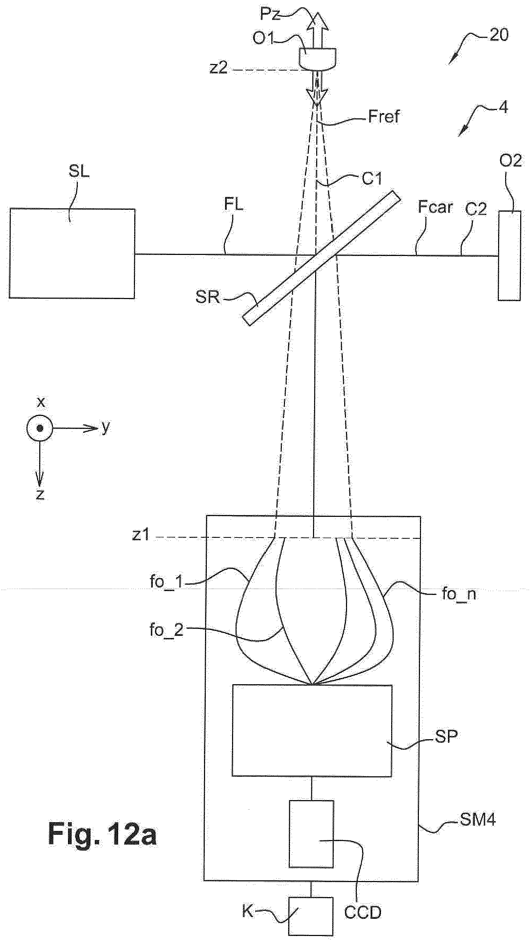

La figure 12a illustre une configuration alternative du procédé 20 de caractérisation d'un faisceau de lumière selon le deuxième exemple, utilisant un quatrième dispositif 4 de caractérisation d'un faisceau de lumière.

Le quatrième dispositif 4 comporte un système de mesure SM4 d'un deuxième type, comprenant :

- le spectromètre SP présentant la fente d'entrée Fe ;
- le capteur CCD d'une caméra tel que précédemment décrit pour les premier et deuxième systèmes de mesure SM1 et SM2 ;
- une pluralité de fibres optiques fo_1, fo_2, ..., fo_n. Ladite pluralité de fibres optiques comporte au moins deux fibres optiques. Le nombre de fibres optiques de la pluralité de fibres optiques est inférieur ou égal au nombre de pixels verticaux du capteur CCD. Ce nombre de pixels verticaux peut être supérieur à 500. Préférentiellement, ladite pluralité de fibres optiques comporte un nombre de fibres optiques compris entre 4 et 100.

Les extrémités d'entrée de la pluralité de fibres optiques fo_1, fo_2, ..., fo_n sont agencées dans le premier plan z1, préférentiellement en une matrice bidimensionnelle, c'est-à-dire comportant au moins deux lignes et deux colonnes, ou alternativement en une matrice-ligne - comportant une seule ligne et plusieurs colonnes, ou en une matrice-colonne - comportant une seule colonne et plusieurs lignes. Lorsque la matrice est bidimensionnelle, le signal du motif d'interférence bidimensionnel M1 peut avantageusement être échantillonné suivant deux dimensions spatiales dans le premier plan z1.

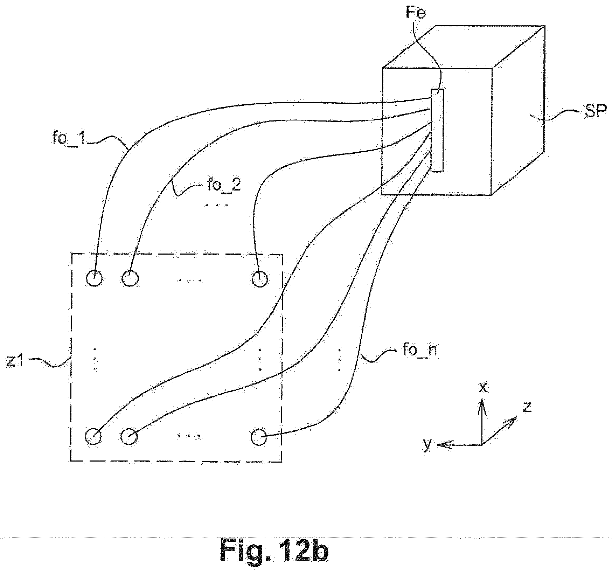

Dans l'exemple de la figure 12b, la matrice bidimensionnelle présente un nombre L>1 de lignes et un nombre C>1 de colonnes, chaque ligne s'étendant parallèlement à l'axe y et chaque colonne s'étendant parallèlement à l'axe x, les axes x et y étant orthogonaux. Plus généralement, chaque ligne pourra s'étendre parallèlement à un premier axe et chaque colonne pourra s'étendre parallèlement à un deuxième axe distinct du premier axe, les premier et deuxième axes formant entre eux un angle non nul et non plat. La matrice bidimensionnelle est préférentiellement carrée, c'est-à-dire avec autant de lignes que de colonnes, ou alternativement rectangle, c'est-à-dire avec un nombre L de lignes différent du nombre C de colonnes.

Les extrémités de sortie de la pluralité de fibres optiques fo_1, fo_2, ..., fo_n sont alors agencées sur la fente d'entrée Fe du spectromètre SP, en prenant avantageusement soin de séparer spatialement les signaux issus de chacune des fibres optiques.

La figure 12b montre une vue partielle en perspective du quatrième dispositif 4 de caractérisation d'un faisceau de lumière. La figure 12b montre ainsi le premier plan z1 dans lequel les extrémités de sortie de la pluralité de fibres optiques fo_1, fo_2, ..., fo_n sont agencées en une matrice bidimensionnelle, et la fente d'entrée Fe du spectromètre SP sur laquelle les extrémités de sortie de ladite pluralité de fibres optiques sont alignées.

La deuxième variante du procédé 10 selon le premier mode de réalisation, précédemment décrite en lien avec la figure 9, et qui permet avantageusement d'obtenir une caractérisation absolue du faisceau à caractériser Fcar indépendamment du faisceau de référence Fref est également compatible avec le procédé 20 selon le deuxième exemple.

Dans cette deuxième variante, le procédé 20 de caractérisation d'un faisceau de lumière selon le deuxième exemple comporte ainsi :

- l'étape i), illustrée à la figure 9, de mesure de la phase spatio-spectrale $\varphi$ref(x,y,$\omega$) du premier sous-faisceau F1, et
- l'étape de mesure de l'amplitude spectrale $A_{ref}(\omega)$ du premier sous-faisceau F1.

La troisième variante du procédé 10 selon le premier mode de réalisation, qui a précédemment été décrite et qui permet avantageusement de prendre en compte la courbure du front d'onde du faisceau de référence Fref introduite par la première optique O1, est également compatible avec le procédé 20 selon le deuxième exemple.

La troisième variante peut alors naturellement être combinée avec la deuxième variante, ou mise en oeuvre indépendamment de ladite deuxième variante.

Dans la troisième variante du procédé 20 de caractérisation d'un faisceau de lumière selon le deuxième exemple, on réalise ainsi, après la réflexion du premier sous-faisceau F1 sur la première optique O1 et avant la recombinaison du faisceau de référence Fref avec le faisceau à caractériser Fcar, la mesure de la phase spatiale à une fréquence $\omega_0$ du faisceau de référence $\varphi_{ref}(x,y,\omega_0)$. Ladite phase spatiale $\varphi_{ref}(x,y,\omega_0)$ est caractéristique de la courbure du front d'onde du faisceau de référence Fref introduite par la première optique O1.

L'alternative à la troisième variante, qui a précédemment été décrite, est également compatible du deuxième exemple.

La quatrième variante du procédé 10 selon le premier mode de réalisation, qui a précédemment été décrite et qui permet avantageusement d'identifier d'éventuels points (x,y) du faisceau à caractériser Fcar dans le premier plan z1 de mesure pour lesquels les spectres du faisceau à caractériser Fcar et du faisceau de référence Fref ne se recouvrent pas, ou se recouvrent seulement partiellement, est également compatible avec le deuxième exemple.

La quatrième variante peut alors naturellement être combinée avec la deuxième variante et/ou avec la troisième variante, ou mise en oeuvre indépendamment desdites deuxième et troisième variantes.

La cinquième variante du procédé 10 selon le premier mode de réalisation de l'invention, qui a précédemment été décrite en lien avec la figure 10 et qui permet avantageusement d'éliminer, au moins partiellement, lesdits éventuels points (x,y) du faisceau à caractériser Fcar dans le premier plan z1 de mesure pour lesquels les spectres du faisceau à caractériser Fcar et du faisceau de référence Fref ne se recouvrent pas, ou se recouvrent seulement partiellement, est également compatible avec le procédé 20 selon le deuxième exemple. Il est à noter que ladite cinquième variante peut alors naturellement être combinée avec une ou plusieurs des deuxième, troisième et quatrième variantes précédemment décrites, ou mise en oeuvre indépendamment desdites deuxième, troisième et quatrième variantes.

La sixième variante du procédé 10 selon le premier mode de réalisation de l'invention est également compatible avec le procédé 20 selon le deuxième exemple. L'algorithme itératif selon la sixième variante, appliqué au procédé 20 selon le deuxième exemple, est le suivant :

i. on suppose que le champ électromagnétique du premier sous-faisceau F1 est effectivement homogène sur la première optique O1, et on en déduit le champ électromagnétique du faisceau de référence Fref dans le plan de mesure z1, comme décrit précédemment ;

ii. connaissant ledit champ du faisceau de référence Fref dans le plan de mesure z1 et en utilisant au moins un interférogramme fréquentiel mesuré grâce au procédé 20 selon le deuxième mode de réalisation de l'invention, on déduit une reconstruction du champ du premier sous-faisceau F1 en espace et en temps, ou en espace et en fréquence ;

iii. cette reconstruction du champ du premier sous-faisceau F1 comprend la partie du champ du premier sous-faisceau F1 qui se réfléchit sur la première optique O1 pour produire le champ du faisceau de référence Fref dans le plan de mesure z1, et qui n'est pas nécessairement homogène spatialement à cette échelle. On utilise cette reconstruction pour déterminer un nouveau champ du faisceau de référence dans le plan de mesure z1, qui cette fois n'est plus basé sur l'hypothèse que le champ du premier sous-faisceau F1 est homogène sur l'ensemble de la surface de la première optique O1.

Dans la présente description, on entend par « interférogramme fréquentiel » l'ensemble des motifs d'interférence spatiaux mesurés en fonction de la fréquence $\omega$, pour un délai temporel $\tau_0$ fixé entre le faisceau de référence Fref et le faisceau à caractériser Fcar. Les motifs d'interférence spatiaux mesurés peuvent être unidimensionnels ou bidimensionnels.

- Si les motifs d'interférence spatiaux mesurés sont unidimensionnels, l'interférogramme fréquentiel comporte une information selon une dimension spatiale et selon une dimension fréquentielle, donc une information bidimensionnelle.
- Si les motifs d'interférence spatiaux mesurés sont bidimensionnels, l'interférogramme fréquentiel comporte une information selon deux dimensions spatiales et selon une dimension fréquentielle, donc une information tridimensionnelle.

Un interférogramme fréquentiel bidimensionnel peut être obtenu en un seul tir laser, en tirant parti de la résolution spatiale le long de la fente d'entrée d'un spectromètre imageur. L'obtention d'un interférogramme fréquentiel tridimensionnel nécessite en revanche de balayer le faisceau laser sur la fente d'entrée du spectromètre, selon l'une de ses deux dimensions spatiales.

On réinjecte alors ce nouveau champ du faisceau de référence Fref à l'étape ii, et on répète de façon itérative les étapes ii et iii, jusqu'à converger vers une solution auto-consistante telle que :

- le champ électromagnétique du faisceau à caractériser Fcar est reconstruit, et
- le champ électromagnétique du faisceau de référence dans le premier plan z1 de mesure est le résultat de l'expansion de ce champ, potentiellement inhomogène même sur une surface restreinte, par la première optique O1.

**Revendications**

1. Procédé (10) de caractérisation d'un faisceau de lumière (FL) comportant une ou plusieurs impulsions laser ultra-brèves présentant des couplages spatio-temporels comprenant les étapes suivantes :

   - séparation au moyen d'une optique séparatrice (Os, SR) du faisceau de lumière (FL) en un premier sous-faisceau (F1) et un deuxième sous-faisceau (F2), le premier sous-faisceau (F1) empruntant un premier chemin optique (C1) et le deuxième sous-faisceau (F2) empruntant un deuxième chemin optique (C2) ;
   - propagation du premier sous-faisceau (F1) sur une première optique (O1) et du deuxième sous-faisceau (F2) sur une deuxième optique (O2), la première optique ayant un premier rayon de courbure de manière que le premier sous-faisceau (F1) en sortie de la première optique, dit « faisceau de référence (Fref) », présente des fronts d'onde d'un premier type, la deuxième optique ayant un deuxième rayon de courbure différent du premier rayon de courbure de manière que le deuxième sous-faisceau (F2) en sortie de la deuxième optique, dit « faisceau à caractérise (Fcar) », présente des fronts d'onde d'un deuxième type différent du premier type, le premier sous-faisceau (F1) ayant un champ électromagnétique inhomogène sur l'ensemble de la surface de la première optique (O1), lesdites première et deuxième optiques (O1, O2) étant, grâce à un moyen de contrôle (Pz), respectivement agencées sur les premier et deuxième chemins optiques (C1, C2) de sorte que le faisceau de référence (Fref) et le faisceau à caractériser (Fcar) présentent entre eux un délai temporel $\tau$ balayant un intervalle de temps T1 avec un pas P1 ;
   - recombinaison au moyen d'une optique recombinatrice (Or, SR) du faisceau de référence (Fref) et du faisceau à caractériser (Fcar) de telle manière qu'ils interfèrent spatialement et forment un motif d'interférence bidimensionnel (M1), le motif s'étendant suivant un premier plan (z1) ;
   - mesure au moyen d'un système de mesure (SM1) dudit motif d'interférence bidimensionnel (M1) en fonction du délai temporel $\tau$ balayant l'intervalle de temps T1 avec le pas P1 entre le faisceau de référence (Fref) et le faisceau à caractériser (Fcar), pour l'obtention d'un interférogramme temporel (S1) ;
   - calcul au moyen d'un calculateur (K) de la transformée de Fourier dans le domaine fréquentiel (TFF) d'au moins un point spatial de l'interférogramme temporel (S1), ladite transformée de Fourier dans le domaine fréquentiel (TFF) présentant un pic fréquentiel central (fc) et des premier et deuxième pics fréquentiels latéraux (fl1, fl2) ;
   - calcul au moyen du calculateur (K) de l'amplitude spectrale $A_R(\omega)$, dite « amplitude spectrale relative », et de la phase spatio-spectrale $\varphi_R(x,y,\omega)$, dite « phase spatio-spectrale relative », pour l'un desdits premier et deuxième pics fréquentiels latéraux de ladite transformée de Fourier dans le domaine fréquentiel (TFF).

2. Procédé (10) selon la revendication précédente **caractérisé en ce qu'**il comporte :

   - une étape i) selon laquelle le champ électromagnétique du faisceau de référence (Fref) dans un premier plan (z1) de mesure du système de mesure (SM1), le premier plan (z1) de mesure étant orthogonal à la direction de propagation du faisceau à caractériser (Fcar), est calculé en supposant que le champ électromagnétique du premier sous-faisceau (F1) est homogène dans un plan (z2) orthogonal à la direction de propagation du sous-faisceau (F1) et tangent à la surface de première optique (O1) ;
   - une étape ii) selon laquelle une reconstruction du champ électromagnétique du premier sous-faisceau (F1) sur la première optique (O1) est calculée, à partir du champ électromagnétique du faisceau de référence (Fref) dans le premier plan (z1) de mesure précédemment calculé et de l'interférogramme temporel (S1) ;
   - une étape iii) selon laquelle le champ électromagnétique du faisceau de référence (Fref) dans le premier plan (z1) de mesure est calculé en utilisant la reconstruction du champ électromagnétique du premier sous-faisceau (F1) sur la première optique (O1), précédemment calculé.

3. Procédé (10) selon la revendication précédente **caractérisé en ce que** l'étape ii) et l'étape iii) sont itérées jusqu'à ce qu'elles convergent vers une solution auto-consistante telle que :

- le champ électromagnétique du faisceau à caractériser (Fcar) soit reconstruit, et
- le champ électromagnétique du faisceau de référence (Fref) dans le premier plan (z1) de mesure soit le résultat de l'expansion dudit champ électromagnétique du faisceau à caractériser (Fca) par la première optique (O1).

4. Procédé (10) selon l'une quelconque des revendications précédentes **caractérisé en ce qu'**il comporte, pour au moins un délai temporel $\tau$ balayant l'intervalle de temps T1 avec le pas P1, une étape de calcul par le calculateur (K) de l'intensité et de la distribution spatiale de l'intensité du faisceau à caractériser (Fcar).

5. Procédé (10) selon la revendication précédente **caractérisé en ce qu'**il comporte, pour chaque délai temporel $\tau$ balayant l'intervalle de temps T1 avec le pas P1, ladite étape de calcul par le calculateur (K) de l'intensité et de la distribution spatiale de l'intensité du faisceau à caractériser (Fcar).

6. Procédé (10) selon l'une quelconque des revendications précédentes **caractérisé en ce qu'**il comporte :

   - une étape de mesure de la phase spatiale à une fréquence $\omega_0$ du faisceau de référence $\varphi_{ref}(x,y,\omega_0)$, ladite phase spatiale $\varphi_{ref}(x,y,\omega_0)$ étant caractéristique de la courbure du front d'onde du faisceau de référence (Fref) introduite par la première optique (O1),
   - puis une étape de soustraction de la phase spatio-spectrale $\frac{\omega}{\omega_0}\varphi_{ref}(x,y,\omega_0)$ à la phase spatio-spectrale relative $\varphi_R(x,y,\omega)$, pour l'obtention de la phase spatio-spectrale relative corrigée du faisceau à caractériser.

7. Procédé (10) selon l'une quelconque des revendications 1 à 5 **caractérisé en ce qu'**il comporte :

   - une étape de mesure de la phase spatio-spectrale du premier sous-faisceau $\varphi_{ref}(x,y,\omega)$, dite « phase spatio-spectrale de référence »,
   - puis une étape de soustraction de ladite phase spatio-spectrale de référence $\varphi_{ref}(x,y,\omega)$ à la phase spatio-spectrale relative $\varphi_R(x,y,\omega)$, pour l'obtention de la phase spatio-spectrale absolue du faisceau à caractériser $\varphi_{abs}(x,y,)\omega)$.

8. Procédé (10,) selon l'une quelconque des revendications 1 à 5 **caractérisé en ce qu'**il comporte :

   - une étape de mesure de la phase spatiale à une fréquence $\omega_0$ du faisceau de référence $\varphi_{ref}(x,y,\omega_0)$, ladite phase spatiale $\varphi_{ref}(x,y,\omega_0)$ étant caractéristique de la courbure du front d'onde du faisceau de référence (Fref) introduite par la première optique (O1),
   - une étape de mesure de la phase spatio-spectrale du premier sous-faisceau $\varphi_{ref}(x,y,\omega)$, dite « phase spatio-spectrale de référence »,
   - puis une étape de soustraction de ladite phase spatio-spectrale de référence $\varphi_{ref}(x,y,\omega)$ et de la phase spatio-spectrale $\frac{\omega}{\omega_0}\varphi_{ref}(x,y,\omega_0)$ à la phase spatio-spectrale relative $\varphi_R(x,y,\omega)$, pour l'obtention de la phase spatio-spectrale absolue corrigée du faisceau à caractériser.

9. Dispositif (1, 2) de caractérisation d'un faisceau de lumière (FL) comportant une ou plusieurs impulsions laser ultra-brèves pour la mise en oeuvre du procédé (10) selon l'une quelconque des revendications précédentes **caractérisé en ce qu'**il comporte :

   - une optique séparatrice (Os, SR) pour la séparation du faisceau de lumière (FL) en un premier sous-faisceau (F1) et un deuxième sous-faisceau (F2), l'optique séparatrice (Os, SR) définissant un premier chemin optique (C1) pour le premier sous-faisceau (F1) et un deuxième chemin optique (C2) pour le deuxième sous-faisceau (F2) ;
   - une première optique (O1) agencée sur le premier chemin optique (C1), la première optique (O1) ayant un premier rayon de courbure de manière que le premier sous-faisceau en sortie de la première optique, dit « faisceau de référence (Fref) », présente des fronts d'onde d'un premier type ;
   - une deuxième optique (O2) agencée sur le deuxième chemin optique (C2), la deuxième optique (O2) ayant un deuxième rayon de courbure différent du premier rayon de courbure de manière que le deuxième sous-faisceau en sortie de la deuxième optique, dit « faisceau à caractériser (Fcar) », présente des fronts d'onde d'un deuxième type, différent du premier type ;

- un moyen de contrôle (Pz) d'un délai temporel τ entre le faisceau de référence (Fref) et le faisceau à caractériser (Fcar) ;
- une optique recombinatrice (Or, SR) pour la recombinaison du faisceau de référence (Fref) et du faisceau à caractériser (Fcar) de telle manière qu'ils interfèrent spatialement et forment un motif d'interférence bidimensionnel (M1) ;
- un système de mesure (SM1) permettant l'obtention, à partir au moins du motif d'interférence bidimensionnel (M1), d'une information temporelle ou d'une information fréquentielle ;
- un calculateur (K) permettant le calcul à partir de l'information temporelle d'une transformée de Fourier dans le domaine fréquentiel (TFF), ou le calcul à partir de l'information fréquentielle d'une transformée de Fourier dans le domaine temporel (TFT), le calculateur étant configuré pour mettre en oeuvre les étapes de calcul du procédé de la revendication 1.

**10.** Dispositif (1) selon la revendication précédente **caractérisé en ce que** l'optique séparatrice (Os) et l'optique recombinatrice (Or) forment une seule et même optique (SR) assurant la séparation du faisceau de lumière (FL) d'une part, et la recombinaison du faisceau de référence (Fref) et du faisceau à caractériser (Fcar) d'autre part.

**Patentansprüche**

**1.** Verfahren (10) zur Charakterisierung eines Lichtstrahls (FL) mit einem oder mehreren ultrakurzen Laserimpulsen mit Raum-Zeit-Kopplungen, das die folgenden Schritte umfasst:

- Aufteilen des Lichtstrahls (FL) mittels einer Trennoptik (Os, SR) in einen ersten Teilstrahl (F1) und einen zweiten Teilstrahl (F2), wobei der erste Teilstrahl (F1) einen ersten optischen Pfad (C1) und der zweite Teilstrahl (F2) einen zweiten optischen Pfad (C2) durchläuft;
- Ausbreitung des ersten Teilstrahls (F1) auf einer ersten Optik (O1) und des zweiten Teilstrahls (F2) auf einer zweiten Optik (O2), wobei die erste Optik einen ersten Krümmungsradius aufweist, sodass der erste Teilstrahl (F1) am Ausgang der ersten Optik, als "Referenzstrahl (Fref)", bezeichnet, Wellenfronten eines ersten Typs aufweist, wobei die zweite Optik einen zweiten Krümmungsradius aufweist, der sich vom ersten Krümmungsradius unterscheidet, sodass der zweite Teilstrahl (F2) am Ausgang der zweiten Optik, als "zu charakterisierender Strahl (Fcar)" bezeichnet, Wellenfronten eines zweiten Typs aufweist, der sich vom ersten Typ unterscheidet, wobei der erste Teilstrahl (F1) ein inhomogenes elektromagnetisches Feld auf der gesamten Oberfläche der ersten Optik (O1) aufweist, wobei die erste und die zweite Optik (O1, O2) dank eines Steuermittels (Pz) jeweils auf dem ersten und zweiten optischen Pfad (C1, C2) so angeordnet sind, dass der Referenzstrahl (Fref) und der zu charakterisierende Strahl (Fcar) zueinander eine zeitliche Verzögerung T aufweisen, die sich über einen Zeitintervall T1 mit einem Schritt P1 erstreckt;
- Rekombinieren mittels einer Rekombinationsoptik (Or, SR) des Referenzstrahls (Fref) und des zu charakterisierenden Strahls (Fcar) derart, dass sie räumlich interferieren und ein zweidimensionales Interferenzmuster (M1) bilden, wobei sich das Muster entlang einer ersten Ebene (z1) erstreckt;
- Messen mittels eines Messsystems (SM1) des zweidimensionalen Interferenzmusters (M1) in Abhängigkeit von der zeitlichen Verzögerung T, die sich über das Zeitintervall T1 mit dem Schritt P1 zwischen dem Referenzstrahl (Fref) und dem zu charakterisierenden Strahl (Fcar) erstreckt, um ein zeitliches Interferogramm (S1) zu erhalten;
- Berechnen mittels eines Rechners (K) der Fourier-Transformation im Frequenzbereich (TFF) von mindestens einem Raumpunkt des zeitlichen Interferogramms (S1), wobei die Fourier-Transformation im Frequenzbereich (TFF) einen zentralen Frequenzpeak (fc) sowie einen ersten und einen zweiten seitlichen Frequenzpeak (fl1, fl2) aufweist;
- Berechnen mittels des Rechners (K) der spektralen Amplitude $A_R(\omega)$, die als "relative spektrale Amplitude" bezeichnet wird, und der räumlich-spektralen Phase $\varphi_R(x,y,\omega)$, die als "relative räumlich-spektrale Phase" bezeichnet wird, für eine der ersten und zweiten seitlichen Frequenzpeaks dieser Fourier-Transformation im Frequenzbereich (TFF).

**2.** Verfahren (10) nach dem vorhergehenden Anspruch, **dadurch gekennzeichnet, dass** es Folgendes umfasst:

- einen Schritt i), gemäß dem das elektromagnetische Feld des Referenzstrahls (Fref) in einer ersten Messebene (z1) des Messsystems (SM1), wobei die erste Messebene (z1) zur Ausbreitungsrichtung des zu charakterisierenden Strahls (Fcar) orthogonal ist, unter der Annahme berechnet wird, dass das elektromagnetische Feld des ersten Teilstrahls (F1) in einer Ebene (z2), die orthogonal zur Ausbreitungsrichtung des Teilstrahls (F1) und tangential zur Oberfläche der ersten Optik (O1) ist, homogen ist;
- einen Schritt ii), gemäß dem eine Rekonstruktion des elektromagnetischen Feldes des ersten Teilstrahls (F1) auf der ersten Optik (O1) berechnet wird, ausgehend von dem zuvor berechneten elektromagnetischen Feld des Referenzstrahls (Fref) in der ersten Messebene (z1) und dem zeitlichen Interferogramm (S1);
- einen Schritt iii), gemäß dem das elektromagnetische Feld des Referenzstrahls (Fref) in der ersten Messebene (z1) unter Verwendung der zuvor berechneten Rekonstruktion des elektromagnetischen Felds des ersten Teilstrahls (F1) auf der ersten Optik (O1) berechnet wird.

3. Verfahren (10) nach vorhergehendem Anspruch, **dadurch gekennzeichnet, dass** Schritt ii) und Schritt iii) so lange wiederholt werden, bis sie zu einer sich selbst erhaltenden Lösung konvergieren, so dass:

- das elektromagnetische Feld des zu charakterisierenden Strahls (Fcar) rekonstruiert wird und
- das elektromagnetische Feld des Referenzstrahls (Fref) in der ersten Messebene (z1) das Ergebnis der Expansion des elektromagnetischen Feldes des durch die erste Optik (O1) zu charakterisierenden Strahls (Fcar) ist.

4. Verfahren (10) nach einem der vorhergehenden Ansprüche, **dadurch gekennzeichnet, dass** es für mindestens eine zeitliche Verzögerung $\tau$, die sich über das Zeitintervall T1 mit der Schrittweite P1 erstreckt, einen Schritt umfasst, bei dem der Rechner (K) die Intensität und die räumliche Verteilung der Intensität des zu charakterisierenden Strahls (Fcar) berechnet.

5. Verfahren (10) nach dem vorhergehenden Anspruch, **dadurch gekennzeichnet, dass** es für jede zeitliche Verzögerung T, die sich über das Zeitintervall T1 mit der Schrittweite P1 erstreckt, den Schritt der Berechnung der Intensität und der räumlichen Verteilung der Intensität des zu charakterisierenden Strahls (Fcar) durch den Rechner (K) umfasst.

6. Verfahren (10) nach einem der vorhergehenden Ansprüche, **dadurch gekennzeichnet, dass** es umfasst:

- einen Schritt des Messens der räumlichen Phase bei einer Frequenz $\omega_0$ des Referenzstrahls $\varphi_{ref}(x,y,\omega_o)$, wobei die räumliche Phase $\varphi_{ref}(x,y,\omega_o)$ für die Wellenfrontkrümmung des Referenzstrahls (Fref) charakteristisch ist, die durch die erste Optik (O1) erzielt wird,
- dann einen Schritt der Subtraktion der räumlich-spektralen Phase $\frac{\omega}{\omega 0}\varphi_{ref}(x,y,\omega_o)$ von der relativen räumlich-spektralen Phase $\varphi_R(x,y,\omega)$, um die korrigierte relative räumlich-spektrale Phase des zu charakterisierenden Strahls zu erhalten.

7. Verfahren (10) nach einem der Ansprüche 1 bis 5 , **dadurch gekennzeichnet, dass** es Folgendes umfasst:

- einen Schritt des Messens der räumlich-spektralen Phase des ersten Teilstrahls $\varphi_{ref}(x,y,\omega)$, der sogenannten "räumlich-spektralen Referenzphase",
- dann einen Schritt der Subtraktion der räumlich-spektralen Referenzphase $\varphi_{ref}(x,y,\omega)$ von der relativen räumlich-spektralen Phase $\varphi_R(x,y,\omega)$, um die absolute räumlich-spektrale Phase des zu charakterisierenden Strahls $\varphi_{abs}(x,y,)\omega)$ zu erhalten.

8. Verfahren (10) nach einem der Ansprüche 1 bis 5 , **dadurch gekennzeichnet, dass** es Folgendes umfasst:

- einen Schritt des Messens der räumlichen Phase bei einer Frequenz $\omega_0$ des Referenzstrahls $\varphi_{ref}(x,y,\omega_o)$, wobei die räumliche Phase $\varphi_{ref}(x,y,\omega_o)$ für die Wellenfrontkrümmung des Referenzstrahls (Fref) charakteristisch ist, die durch die erste Optik (O1) erzielt wird,
- einen Schritt des Messens der räumlich-spektralen Phase des ersten Teilstrahls $\varphi_{ref}(x,y,\omega)$, der sogenannten "räumlich-spektralen Referenzphase",
- dann einen Schritt der Subtraktion der räumlich-spektralen Referenzphase $\varphi_{ref}(x,y,\omega)$ und der räumlich-spektralen Phase $\frac{\omega}{\omega 0}\varphi_{ref}(x,y,\omega_o)$ von der relativen räumlich-spektralen Phase $\varphi_R(x,y,\omega)$, um die korrigierte absolute räumlich-spektrale Phase des zu charakterisierenden Strahls zu erhalten.

9. Vorrichtung (1, 2) zur Charakterisierung eines Lichtstrahls (FL), einen oder mehrere ultrakurze Laserimpulse umfassend, für die Durchführung des Verfahrens (10) nach einem der vorhergehenden Ansprüche, **dadurch gekennzeichnet, dass** sie umfasst:

- eine Trennoptik (Os, SR) zum Aufteilen des Lichtstrahls (FL) in einen ersten Teilstrahl (F1) und einen zweiten Teilstrahl (F2), wobei die Trennoptik (Os, SR) einen ersten optischen Pfad (C1) für den ersten Teilstrahl (F1) und einen zweiten optischen Pfad (C2) für den zweiten Teilstrahl (F2) definiert;
- eine erste Optik (O1), die auf dem ersten optischen Pfad (C1) angeordnet ist, wobei die erste Optik (O1) einen ersten Krümmungsradius aufweist, sodass der erste Teilstrahl am Ausgang der ersten Optik, der als "Referenzstrahl (Fref)" bezeichnet wird, Wellenfronten eines ersten Typs aufweist;
- eine zweite Optik (O2), die auf dem zweiten optischen Pfad (C2) angeordnet ist, wobei die zweite Optik (O2) einen zweiten Krümmungsradius hat, der sich von dem ersten Krümmungsradius unterscheidet, sodass der zweite Teilstrahl am Ausgang der zweiten Optik, der als "zu charakterisierender Strahl (Fcar)" bezeichnet wird, Wellenfronten eines zweiten Typs aufweist, der sich vom ersten Typ unterscheidet;
- ein Mittel (Pz) zur Steuerung einer zeitlichen Verzögerung T zwischen dem Referenzstrahl (Fref) und dem zu charakterisierenden Strahl (Fcar);
- eine Rekombinationsoptik (Or, SR) zum Rekombinieren des Referenzstrahls (Fref) und des zu charakterisierenden Strahls (Fcar), sodass sie räumlich interferieren und ein zweidimensionales Interferenzmuster (M1) bilden;
- ein Messsystem (SM1), das ermöglicht, zumindest aus dem zweidimensionalen Interferenzmuster (M1) eine Zeitinformation oder eine Frequenzinformation zu erhalten;
- einen Rechner (K), der die Berechnung anhand der zeitlichen Information einer Fourier-Transformation im Frequenzbereich (TFF) oder die Berechnung anhand der Frequenzinformation einer Fourier-Transformation im Zeitbereich (TFT) ermöglicht, wobei der Rechner so konfiguriert ist, dass er die Berechnungsschritte des Verfahrens nach Anspruch 1 umsetzt.

10. Vorrichtung (1) nach dem vorhergehenden Anspruch, **dadurch gekennzeichnet, dass** die Trennoptik (Os) und die Rekombinationsoptik (Or) eine einzige Optik (SR) bilden, die die Trennung des Lichtstrahls (FL) einerseits und die Rekombination des Referenzstrahls (Fref) und des zu charakterisierenden Strahls (Fcar) andererseits gewährleistet.

**Claims**

1. Method (10) for characterization of a light beam (FL) comprising one or more ultrashort laser pulses having space-time couplings comprising the following steps:

- separation of the light beam (FL) by means of a separator optic (Os, SR) into a first sub-beam (F1) and a second sub-beam (F2), the first sub-beam (F1) taking a first optical path (C1) and the second sub-beam (F2) taking a second optical path (C2);
- propagation of the first sub-beam (F1) over a first optic (O1) and of the second sub-beam (F2) over a second optic (O2), the first optic having a first radius of curvature so that the first sub-beam (F1) on leaving the first optic, referred to as "reference beam" (Fref), has wave fronts of a first type, the second optic having a second radius of curvature different from the first radius of curvature so that the second sub-beam (F2) on leaving the second optic, referred to as "characterized beam" (Fcar), has wave fronts of a second type different to the first type, the first sub-beam (F1) having an inhomogeneous electromagnetic field over the entire surface of the first optic (O1), said first and second optics (O1, O2) being, thanks to control means (Pz), respectively arranged in the first and second optical paths (C1, C2) so that the reference beam (Fref) and the characterized beam (Fcar) are separated by a time delay $\tau$ sweeping a time interval T1 with a step P1;
- recombination of the reference beam (Fref) and the characterized beam (Fcar) by means of a recombiner optic (Or, SR) in such a way that the beams spatially interfere and form a two-dimensional interference pattern (M1), the pattern extending along a first plane (z1);
- measurement of said two-dimensional interference pattern (M1) by means of a measurement system (SM1) as a function of the time delay $\tau$ sweeping the time interval T1 with the step P1 between the reference beam (Fref) and the characterized beam (Fcar), in order to obtain a temporal interferogram (S1);
- calculation, by means of a calculator (K), of the Fourier transform in the frequency domain (TFF) of at least one spatial point of the temporal interferogram (S1), said Fourier transform in the frequency domain (TFF) having a frequency central peak (fc) and first and second frequency side peaks (fl1, fl2);
- calculation, by means of a calculator (K), of the spectral amplitude $A_R(\omega)$, referred to as "relative spectral amplitude", and of the spatial-spectral phase $\varphi_R(x,y,\omega)$, referred to as "relative spatial-spectral phase", for one of said first and second frequency side peaks of said Fourier transform in the frequency domain (TFF).

2. Method (10) according to the preceding claim **characterized in that** it comprises:

- a step i) according to which the electromagnetic field of the reference beam (Fref) in a first measuring plane (z1) of the measuring system (SM1), the first measuring plane (z1) being orthogonal to the direction of propagation of the characterized beam (Fcar), is calculated by assuming that the electromagnetic field of the first sub-beam (F1) is homogeneous in a plane (z2) orthogonal to the direction of propagation of the sub-beam (F1) and tangent to the surface of the first optic (O1);
- a step ii) according to which a reconstruction of the electromagnetic field of the first sub-beam (F1) is calculated, from the electromagnetic field of the reference beam (Fref) in the first measuring plane (z1) previously calculated and the temporal interferogram (S1);
- a step iii) according to which the electromagnetic field of the reference beam (Fref) in the first measuring plane (z1) is calculated using the reconstruction of the electromagnetic field of the first sub-beam (F1) on the first optic (O1) previously calculated.

3. Method (10) according to the preceding claim **characterized in that** step ii) and step iii) are iterated until they converge towards a self-consistent solution such that:

- the electromagnetic field of the characterized beam (Fcar) is reconstructed, and
- the electromagnetic field of the reference beam (Fref) in the first measuring plane (z1) is the result of the expansion of said electromagnetic field of the characterized beam (Fcar) by the first optic (O1).

4. Method (10) according to any of the preceding claims **characterized in that** it comprises, for at least one time delay $\tau$ sweeping the time interval T1 with the step P1, a step of calculation by the calculator (K) of the intensity and of the spatial distribution of the intensity of the characterized beam (Fcar).

5. Method (10) according to the preceding claim **characterized in that** it comprises, for each time delay $\tau$ sweeping the time interval T1 with the step P1, said step of calculation by the calculator (K) of the intensity and the spatial distribution of the intensity of the characterized beam (Fcar).

6. Method (10) according to any of the preceding claims **characterized in that** it comprises:

- a step of measuring the spatial phase at a frequency $\omega_0$ of the reference beam $\varphi_{ref}(x,y,\omega_0)$, said spatial phase $\varphi_{ref}(x,y,\omega_0)$ being characteristic of the curvature of the wave front of the reference beam (Fref) introduced by the first optic (O1),
- then a step of subtracting the spatial-spectral phase $\dfrac{\omega}{\omega_0}\,\varphi_{ref}(x,y,\omega_0)$ from the relative spatial-spectral phase $\varphi_R(x,y,\omega)$, to obtain the corrected relative spatial-spectral phase of the characterized beam.

7. Method (10) according to any of claims 1 to 5 **characterized in that** it comprises:

- a step of measuring the spatial-spectral phase of the first sub-beam $\varphi_{ref}(x,y,\omega)$, referred to as "reference spatial-spectral phase",
- then a step of subtracting said reference spatial-spectral phase $\varphi_{ref}(x,y,\omega)$ from the relative spatial-spectral phase $\varphi_R(x,y,\omega)$, to obtain the absolute spatial-spectral phase of the characterized beam $\varphi_{abs}(x,y,\omega)$.

8. Method (10) according to any of claims 1 to 5 **characterized in that** it comprises:

- a step of measuring the spatial phase at a frequency $\omega_0$ of the reference beam $\varphi_{ref}(x,y,\omega_0)$, said spatial phase $\varphi_{ref}(x,y,\omega_0)$ being characteristic of the curvature of the wave front of the reference beam (Fref) introduced by the first optic (O1),
- a step of measuring the spatial-spectral phase of the first sub-beam $\varphi_{ref}(x,y,\omega)$, referred to as "reference spatial-spectral phase",

- then a step of subtracting said reference spatial-spectral phase $\varphi_{ref}(x,y,\omega)$ and spatial-spectral phase

$$\frac{\omega}{\omega_0}\,\varphi_{ref}(x,y,\omega_0)$$

from the relative spatial-spectral phase $\varphi_R(x,y,\omega)$, to obtain the corrected absolute spatial-spectral phase of the characterized beam.

9. Device (1, 2) for characterization of a light beam (FL) comprising one or more ultrashort laser pulses having space-time couplings for the implementation of the method (10) according to any of the preceding claims **characterized in that** it comprises:

- a separator optic (Os, SR) for the separation of the light beam (FL) into a first sub-beam (F1) and a second sub-beam (F2), the separator optic (Os, SR) defining a first optical path (C1) for the first sub-beam (F1) and a second optical path (C2) for the second sub-beam (F2);
- a first optic (O1) arranged in the first optical path (C1), the first optic (O1) having a first radius of curvature in such a way that the first sub-beam leaving the first optic, referred to as "reference beam (Fref)", has wave fronts of a first type;
- a second optic (O2) arranged in the second optical path (C2), the second optic (O2) having a second radius of curvature different from the first radius of curvature in such a way that the second sub-beam leaving the second optic, referred to as "characterized beam (Fear)", has wave fronts of a second type, different to the first type;
- a means of controlling (Pz) a time delay $\tau$ between the reference beam (Fref) and the characterized beam (Fear);
- a recombiner optic (Or, SR) for the recombination of the reference beam (Fref) and the characterized beam (Fcar) in such a way that they interfere spatially and form a two-dimensional interference pattern (M1);
- a measuring system (SM1) making it possible to obtain, from at least the two-dimensional interference pattern (M1), a temporal information or a frequency information;
- a calculator (K) enabling the calculation from the temporal information of a Fourier transform in the frequency domain (TFF), or the calculation from the frequency information of a Fourier transform in the temporal domain (TFT), the calculator being configured to implement the calculation steps of the method of claim 1.

10. Device (1) according to the preceding claim **characterized in that** the separator optic (Os) and the recombiner optic (Or) form a single and same optic (SR) ensuring the separation of the light beam (FL) on the one hand, and the recombination of the reference beam (Fref) and the characterized beam (Fcar) on the other hand.

cT

D

z

**Fig. 1a**

D

z

**Fig. 1b**

**Fig. 2a**

Pz

O1

z2

Fref

SL

O2

Fcar

SR

x

y

z

z1

E

Obj

**Fig. 2b**

SM1

CCD

K

10

1

**Fig. 2c**

Fig. 3

EP 3 155 385 B1

Fig. 4

**Fig. 5a**

**Fig. 6a**

**Fig. 5b**

**Fig. 6b**

**Fig. 5c**

**Fig. 6c**

**Fig. 7a**

**Fig. 7b**

Fig. 8

Pz

O1

MT

SL

Ma

F1

O2

F2

SR

x

y

z

Fig. 9

E

Obj

SM1

K

CCD

O1

FTNL

10

SL

FL

F1

O2

Pz

F2

SR

x
y
z

Fig. 10

E

Obj

SM1

K

CCD

**Fig. 11a**

**Fig. 11b**

**Fig. 11c**

Pz

O1

z2

Fref

SL

FL

C1

Fcar    C2    O2

SR

x

y

z

z1

fo_1

fo_n

fo_2

SP

**Fig. 12a**

SM4

K    CCD

**Fig. 12b**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2976663 A1

**Littérature non-brevet citée dans la description**

- **COUSIN et al.** Three-dimensional spatiotemporal pulse characterization with an acoustooptic pulse shaper and a Hartmann-Shack wacefront sensor. *Optics Letters,* 2012, vol. 37, 3291
- **ALONSO et al.** Frequency resolved wavefront retrieval and dynamics of diffractive focused ultrashort pulses. *J. Opt. Soc. Am. B,* 2012, vol. 29 (8
- **LIU et al.** Self-referenced spectral interferometry based on self-diffraction effect. *J. Opt. Soc. Am. B,* 2012, vol. 29 (1
- **T. OKSENHENDLER et al.** Self-referenced spectral interferometry. *Applied Physics B,* (99), 7-12